# FASCICULE DE BREVET EUROPEEN

(11) **EP 3 131 946 B1**
(45) Date de publication et mention de la délivrance du brevet: **22.11.2023**
(21) Numéro de dépôt: 15720382.9
(22) Date de dépôt: 14.04.2015
(51) Int. Cl.: C08G 69/26, C08L 77/06, C08L 77/12, B29C 70/06, C08J 5/04, C08J 5/00, B29C 45/00

(54) **PROCEDE DE FABRICATION D'UN MATERIAU THERMOPLASTIQUE A BASE DE POLYAMIDE SEMI-CRISTALLIN**
VERFAHREN ZUR HERSTELLUNG EINES THERMOPLASTISCHEN MATERIALS AUS SEMIKRISTALLINEM POLYAMID
METHOD FOR MANUFACTURING A THERMOPLASTIC MATERIAL MADE FROM SEMI-CRYSTALLINE POLYAMIDE

(30) Priorité: 15.04.2014 FR 1453347
(43) Date de publication de la demande: 22.02.2017
(73) Titulaire: Arkema France, 92700 Colombes (FR)
(72) Inventeur: BRIFFAUD, Thierry, 27300 BERNAY (FR); HOCHSTETTER, Gilles, F-94240 L'HAY LES ROSES (FR); CAPELOT, Mathieu, 27300 BERNAY (FR)
(74) Mandataire: Arkema Patent
(86) Numéro de dépôt international: PCT/FR2015/050996
(87) Numéro de publication internationale: WO 2015/159014

(56) Documents cités:
- EP-A1- 2 386 397
- EP-A1- 2 586 585
- WO-A1-2014/064375
- CN-A- 102 234 373
- FR-A1- 2 997 089
- KR-A- 20080 032 357
- US-A- 3 696 074

## Description

L'invention concerne un procédé de fabrication d'un matériau thermoplastique comprenant au moins une étape de moulage par injection d'une composition de ou pour un matériau composite thermoplastique avec une matrice en polyamide (PA) semi-cristallin de température de transition vitreuse Tg d'au moins 90°C et de température de fusion Tf inférieure ou égale à 280 °C et d'enthalpie de cristallisation supérieure à 40 J/g, en particulier des pièces mécaniques à base dudit matériau.

EP 0261 020 décrit l'utilisation de prépolymères semi-cristallins réactifs à base de PA 6, 11 et 12 pour la fabrication d'un composite thermoplastique par un procédé de pultrusion. Les prépolymères de structure aliphatique tels que décrits présentent des Tg faibles et des performances mécaniques insuffisantes à chaud.

EP 550 314 décrit, parmi ses exemples, des compositions (non réactives) de copolyamide en cherchant des températures de fusion supérieures à 250°C et des Tg limitées avec la plupart des exemples cités ayant une Tg trop basse (< 80°C) ou une Tf trop élevée (> 300°C).

EP 1 988 113 décrit une composition de moulage à base d'un copolyamide 1 0T/6T avec :
- 40 à 95% mol de 10T
- 5 à 40% de 6T.

Sont visés en particulier des polyamides de température de fusion élevée et supérieure à 270°C. Les exemples mentionnés et la figure 1 nous enseignent que la température de fusion de ces compositions est d'au moins environ 280°C.

WO 2011/003973 décrit des compositions comprenant de 50 à 95 mol% d'un motif à base d'une diamine aliphatique linéaire comportant de 9 à 12 atomes de carbone et d'acide téréphtalique et de 5 à 50% de motif associant l'acide téréphtalique à un mélange de 2,2,4 et 2,4,4 triméthylhexanediamine.

US 2011306718 décrit un procédé de pultrusion de polyamides aliphatiques réactives de faible Tg associés à des allongeurs de chaînes de structure polymérique portant plusieurs (et bien supérieur à 2) fonctions d'anhydrides ou d'époxydes. Ce document ne décrit aucun allongeur non polymérique.

US 3696074 décrit des copolyamides obtenus à partir de dodecaméthylène diamine, d'héxaméthylène diamine, d'acide téréphtalique et d'acide adipique.

EP 2 586 585 décrit des matériaux composites thermoplastiques de Tg supérieure ou égale à 80°C, renforcés avec des fibres synthétiques.

Les inconvénients de l'état de l'art, avec l'absence d'un bon compromis entre les performances mécaniques et l'aptitude de mise en oeuvre (facilité de transformation) à plus basse température avec un temps de cycle de production plus court sont surmontés par la solution de la présente invention qui utilise des compositions de PA semi-cristallin, permettant une mise en oeuvre plus facile à des températures plus basses avec une économie sur le bilan global énergétique du procédé de mise en oeuvre et notamment par injection ou injection moulage, un temps de cycle de production plus court et une productivité améliorée, par une aptitude à la cristallisation rapide dudit polymère polyamide et tout en maintenant à un niveau élevé les performances mécaniques desdits matériaux finaux. Plus particulièrement, dans le cas du procédé utilisant des compositions réactives, on cherche à avoir une cinétique de réaction plus rapide tout en ayant une vitesse et/ou une température de cristallisation du polymère formé également plus élevée.

Le choix d'un polymère polyamide semi-cristallin, comme matrice du matériau dans le procédé de l'invention, a comme intérêt par rapport aux polyamides amorphes, des performances mécaniques significativement améliorées notamment à chaud, telles que la résistance au fluage ou à la fatigue. En outre, présenter un point de fusion au-delà de 200°C a pour avantage dans l'automobile d'être compatible avec les traitements par cataphorèse, ce que ne permet pas une structure de type PA amorphe. Comme pour les amorphes, on recherche une Tg supérieure ou égale à 90°C pour assurer de bonnes propriétés mécaniques au matériau sur toute la plage de température d'utilisation par exemple jusqu'à 90°C pour l'éolien, jusqu'à 100°C pour l'automobile et jusqu'à 120°C pour l'aéronautique. Par contre, un point de fusion trop élevé, en particulier supérieur à 280°C, est en revanche néfaste car il nécessite la mise en oeuvre du matériau à des températures plus élevées avec des contraintes de matériel de moulage à utiliser (et système de chauffe associé) et une surconsommation énergétique avec en plus des risques de dégradation thermique par chauffage à des températures plus élevées que la température de fusion dudit polyamide, avec comme conséquence l'affectation des propriétés de la matrice thermoplastique finale et du matériau qui en résulte. La cristallinité dudit polymère doit être la plus élevée possible mais avec une température de fusion Tf pas trop élevée (Tf ≤ 280°C et plus particulièrement ≤ 270°C) pour optimiser les performances mécaniques et la vitesse de cristallisation et/ou la température de cristallisation la plus élevée possible, ceci pour réduire le temps d'extrusion, d'injection ou de moulage avant éjection de la pièce moulée avec un choix sélectif de la composition dudit polyamide semi-cristallin. Donc, l'objet de la présente invention est un procédé de fabrication d'un matériau thermoplastique par injection ou injection moulage de compositions spécifiques de matériaux thermoplastique, en particulier à base de polyamide semi-cristallin, présentant un bon compromis entre des performances mécaniques élevées (tenue mécanique) en particulier à chaud et une mise en oeuvre facile. Cela signifie qu'il y a comme objectif l'utilisation de compositions faciles à mettre en oeuvre avec des températures de transformation et de mise en oeuvre plus basses que celles pour d'autres compositions de l'état de l'art, avec un bilan énergétique global de mise en oeuvre plus favorable, un temps de cycle plus court et une productivité plus élevée. Plus particulièrement, la solution de l'invention, dans le cas de l'utilisation de compositions réactives, permet en utilisant des compositions à base de prépolymères polyamides réactifs semi-cristallins, à la fois une cinétique de réaction et une cinétique de cristallisation rapide avec un temps de cycle plus court. Plus particulièrement, la matrice polymère polyamide tout en ayant une Tg élevée et une Tf limitée comme définies, avec une mise en oeuvre facile dudit matériau, doit avoir également une vitesse de cristallisation élevée, caractérisée d'abord par un écart entre température de fusion et de cristallisation Tf-Tc ne dépassant pas 50°C, de préférence ne dépassant pas 40°C et plus particulièrement ne dépassant pas 30°C. Plus préférentiellement, cet écart Tf-Tc ne dépasse pas 30°C, sauf si Tf-Tg est < 150°C, auquel cas (Tf-Tg < 150°C) l'écart Tf-Tc peut varier jusqu'à 50°C. Les performances mécaniques ou tenue mécanique à chaud du matériau peuvent être évaluées par la variation du module mécanique entre la température ambiante (23°C) et 100°C avec un maintien d'au moins à 75% des performances mécaniques, en termes de module, par rapport à celles à l'ambiante (23°C). Donc, l'objet de l'invention est de mettre au point un procédé de fabrication d'un matériau therpoplastique par injection ou injection moulage d'une composition de polyamide répondant à ces besoins.

Donc, le premier objet de l'invention concerne un procédé de fabrication d'un matériau therpoplastique par injection ou injection moulage d'une composition spécifique de polyamide (PA) semi-cristallin pour un matériau thermoplastique ou une composition de matériau thermoplastique, avec une matrice thermoplastique ayant une Tg d'au moins 90°C et une Tf inférieure ou égale à 280°C de préférence inférieure à 280 °C et une enthalpie de cristallisation supérieure à 40 J/ g et plus particulièrement de fabrication de pièces mécaniques à base dudit matériau. Cette composition peut être réactive par l'intermédiaire de prépolymères réactifs entre eux par condensation ou avec un allongeur de chaîne par polyaddition et sans élimination de sous produits volatils. Elle peut en alternative être une composition non réactive à base de polyamides polymères correspondant au polymère final de la matrice thermoplastique. Ladite composition spécifique est basée sur le choix sélectif d'au moins deux motifs d'amide A et B différents et à des proportions molaires spécifiques avec présence optionnelle d'au moins un troisième (C) et éventuellement d'un quatrième (D) motif amide, ces motifs étant différents les uns par rapport aux autres.

Un autre objet de l'invention concerne l'utilisation de ladite composition spécifique de PA pour la fabrication d'un matériau thermoplastique de même composition et plus particulièrement de pièces mécaniques à base de ce matériau par injection ou injection moulage.

Donc, le premier objet concerne un procédé de fabrication d'un matériau thermoplastique, en particulier d'une pièce mécanique à base dudit matériau, caractérisé en ce qu'il comprend au moins une étape d'injection, injection moulage ou moulage d'une composition pour matériau thermoplastique ou une composition de matériau thermoplastique, ledit matériau comprenant une matrice thermoplastique à base d'au moins un polymère thermoplastique, avec, en ce qui concerne ladite composition :
- ledit polymère thermoplastique de matrice étant un polymère polyamide semi-cristallin avec une température de transition vitreuse Tg d'au moins 90°C, de préférence d'au moins 100°C, plus préférentiellement d'au moins 110°C, encore plus préférentiellement 120°C, une température de fusion Tf inférieure ou égale à 280°C, en particulier inférieure à 280°C, de préférence inférieure ou égale à 270°C, en particulier allant de 220 à 270°C et une enthalpie de cristallisation supérieure à 40 J/g
- ladite composition comprenant :
   a) une composition réactive comprenant ou constituée de, au moins un prépolymère (ou oligomère, avec oligomère et prépolymère signifiant la même chose pour la suite) polyamide réactif, ladite composition étant une composition précurseur dudit polymère polyamide de ladite matrice,
      ou en alternative à a)
   b) une composition non réactive d'au moins un polymère polyamide, ladite composition étant celle de ladite matrice thermoplastique avec la Tg et la Tf comme définies ci-dessus, et avec :
- ladite composition a) ou b) comprenant ou étant constituée de un ou plusieurs polyamides, y compris copolyamides statistiques ou séquencés qui sont des prépolymères (ou oligomères) selon a) ou qui sont des polymères selon b) et lesquels comprennent des motifs amides A et B différents et en option, des motifs amides C et D différents, sélectionnés comme suit :
- A : est un motif amide majoritaire présent à un taux molaire allant de 55 à 95%, de préférence de 55 à 85%, plus préférentiellement de 55 à 80%, encore plus préférentiellement de 55 à 75%, en particulier de 55 à 70%, choisi parmi les motifs x.T, où x est une diamine aliphatique linéaire en C₉ à C₁₈, de préférence en C₉, C₁₀, C₁₁, C₁₂ et où T est l'acide téréphtalique,
- B : est un motif amide différent de A, lequel motif B est présent à un taux molaire allant de 5 à 45%, de préférence de 15 à 45%, plus préférentiellement de 20 à 45%, encore plus préférentiellement de 25 à 45%, en particulier de 30 à 45%, en fonction de la Tf du polyamide à base de motif A et avec ledit motif amide B étant choisi parmi les motifs x'.T, où x' est choisi parmi :
   ∘ B1) une diamine aliphatique ramifiée portant une seule ramification (branchement signifiant la même chose) méthyle ou éthyle, de préférence méthyle, en particulier la 2-méthyl pentaméthylène diamine (MPMD) ou la 2-méthyl octaméthylène diamine (MOMD) et ayant une longueur de chaîne principale différente d'au moins deux atomes de carbone par rapport à la longueur de chaîne principale de la diamine x dudit motif A associé, de préférence x' (selon B1)) étant la MPMD ou
   ∘ B2) la m-xylylène diamine (MXD) ou
   ∘ B3) une diamine aliphatique linéaire en C₄ à C₁₈ quand dans ledit motif A, ladite diamine x est une diamine aliphatique linéaire en C₁₁ à C₁₈ et x' est une diamine en C₉ à C₁₈ quand dans ledit motif A, ladite diamine x est une diamine en C₉ ou C₁₀, de préférence avec une différence d'au moins deux atomes de carbone entre la chaîne de diamine x dudit motif A et la chaîne de diamine x' dudit motif B, sous réserve que le motif B3 est choisi parmi diamine aliphatique linéaire en C₄, C₅ et C₇ à C₁₈ quand dans ledit motif A, ladite diamine x est une diamine aliphatique linéaire en C₁₂,
   et de préférence, ledit motif B est choisi parmi les motifs x'.T, où x' est la MPMD selon option B1) ou la MXD selon option B2) ou une diamine aliphatique linéaire comme définie ci-haut selon option B3) ou plus préférentiellement x' est la MPMD selon B1) ou la MXD selon B2) et encore plus préférentiellement x' est la MXD selon B2)
- C : motif amide optionnel différent de A et de B et choisi parmi les motifs amides à base de (signifiant comprenant) une structure cycloaliphatique et/ou aromatique ou à base de x'T tel que défini ci-haut pour B mais avec x' différent de x' pour le motif B
- D : motif amide optionnel différent de A, de B et de C, quand C est présent et choisi parmi les motifs amides aliphatiques issus de :
   o aminoacides ou lactames en C₆ à C₁₂, de préférence C₆, C₁₁ et C₁₂ ou leurs mélanges, ou
   o la réaction d'un diacide aliphatique linéaire en C₆ à C₁₈, de préférence en C₆ à C₁₂ et d'une diamine aliphatique linéaire en C₆ à C₁₈, de préférence en C₆ à C₁₂ ou de leurs mélanges,
et sous la condition que la somme des taux molaires A + B + C + D soit égale à 100%, ladite composition étant dépourvue de fibres de renfort.

La somme des taux molaires en l'absence de C et D se réduit à A + B = 100%, avec A et B étant complémentaires à 100%. Si C est présent sans D, dans ce cas cette somme se réduit à A + B + C = 100%. Si seul D est présent sans C, ladite somme de 100% correspond à A + B + D.

Avantageusement, la composition comprend ou est constituée des motifs A en proportion de 55 à 95% et B en proportion de 5 à 45%, la somme des taux molaires de A + B étant égale à 100%.

Avantageusement, la composition comprend ou est constituée des motifs A en proportion de 55 à 95% et B en proportion de 15 à 45%, la somme des taux molaires de A + B étant égale à 100%.

Avantageusement, la composition comprend ou est constituée des motifs A en proportion de 55 à 95% et B en proportion de 20 à 45%, la somme des taux molaires de A + B étant égale à 100%.

Avantageusement, la composition comprend ou est constituée des motifs A en proportion de 55 à 95% et B en proportion de 25 à 45%, la somme des taux molaires de A + B étant égale à 100%.

Avantageusement, la composition comprend ou est constituée des motifs A en proportion de 55 à 95% et B en proportion de 30 à 45%, la somme des taux molaires de A + B étant égale à 100%.

Avantageusement, la composition comprend ou est constituée des motifs A en proportion de 55 à 85% et B en proportion de 5 à 45%, la somme des taux molaires de A + B étant égale à 100%.

Avantageusement, la composition comprend ou est constituée des motifs A en proportion de 55 à 85% et B en proportion de 15 à 45%, la somme des taux molaires de A + B étant égale à 100%.

Avantageusement, la composition comprend ou est constituée des motifs A en proportion de 55 à 85% et B en proportion de 20 à 45%, la somme des taux molaires de A + B étant égale à 100%.

Avantageusement, la composition comprend ou est constituée des motifs A en proportion de 55 à 85% et B en proportion de 25 à 45%, la somme des taux molaires de A + B étant égale à 100%.

Avantageusement, la composition comprend ou est constituée des motifs A en proportion de 55 à 85% et B en proportion de 30 à 45%, la somme des taux molaires de A + B étant égale à 100%.

Avantageusement, la composition comprend ou est constituée des motifs A en proportion de 55 à 80% et B en proportion de 5 à 45%, la somme des taux molaires de A + B étant égale à 100%.

Avantageusement, la composition comprend ou est constituée des motifs A en proportion de 55 à 80% et B en proportion de 15 à 45%, la somme des taux molaires de A + B étant égale à 100%.

Avantageusement, la composition comprend ou est constituée des motifs A en proportion de 55 à 80% et B en proportion de 20 à 45%, la somme des taux molaires de A + B étant égale à 100%.

Avantageusement, la composition comprend ou est constituée des motifs A en proportion de 55 à 80% et B en proportion de 25 à 45%, la somme des taux molaires de A + B étant égale à 100%.

Avantageusement, la composition comprend ou est constituée des motifs A en proportion de 55 à 80% et B en proportion de 30 à 45%, la somme des taux molaires de A + B étant égale à 100%.

Avantageusement, la composition comprend ou est constituée des motifs A en proportion de 55 à 75% et B en proportion de 5 à 45%, la somme des taux molaires de A + B étant égale à 100%.

Avantageusement, la composition comprend ou est constituée des motifs A en proportion de 55 à 75% et B en proportion de 15 à 45%, la somme des taux molaires de A + B étant égale à 100%.

Avantageusement, la composition comprend ou est constituée des motifs A en proportion de 55 à 75% et B en proportion de 20 à 45%, la somme des taux molaires de A + B étant égale à 100%.

Avantageusement, la composition comprend ou est constituée des motifs A en proportion de 55 à 75% et B en proportion de 25 à 45%, la somme des taux molaires de A + B étant égale à 100%.

Avantageusement, la composition comprend ou est constituée des motifs A en proportion de 55 à 75% et B en proportion de 30 à 45%, la somme des taux molaires de A + B étant égale à 100%.

Avantageusement, la composition comprend ou est constituée des motifs A en proportion de 55 à 70% et B en proportion de 5 à 45%, la somme des taux molaires de A + B étant égale à 100%.

Avantageusement, la composition comprend ou est constituée des motifs A en proportion de 55 à 70% et B en proportion de 15 à 45%, la somme des taux molaires de A + B étant égale à 100%.

Avantageusement, la composition comprend ou est constituée des motifs A en proportion de 55 à 70% et B en proportion de 20 à 45%, la somme des taux molaires de A + B étant égale à 100%.

Avantageusement, la composition comprend ou est constituée des motifs A en proportion de 55 à 70% et B en proportion de 25 à 45%, la somme des taux molaires de A + B étant égale à 100%.

Avantageusement, la composition comprend ou est constituée des motifs A en proportion de 55 à 70% et B en proportion de 30 à 45%, la somme des taux molaires de A + B étant égale à 100%.

Avantageusement, le motif B dans les compositions comprenant ou constituées des motifs A et B, la somme des taux molaires de A + B étant égale à 100% ci-dessus définies est un motif B1), en particulier un motif x'T où x' est la MPMD, ou un motif B2), en particulier un motif x'T où x' est la MXD.

Avantageusement, le motif B dans les compositions comprenant ou constituées des motifs A et B, la somme des taux molaires de A + B étant égale à 100% ci-dessus définies est un motif B2), en particulier un motif x'T où x' est la MXD.

Avantageusement, le motif B dans les compositions comprenant ou constituées des motifs A et B, la somme des taux molaires de A + B étant égale à 100% ci-dessus définies est un motif B1), en particulier un motif x'T où x' est la MPMD.

Avantageusement, le motif B dans les compositions comprenant ou constituées des motifs A et B, la somme des taux molaires de A + B étant égale à 100% ci-dessus définies est un motif B2), en particulier un motif x'T où x' est la MXD.

Avantageusement, le motif B dans les compositions comprenant ou constituées des motifs A et B, la somme des taux molaires de A + B étant égale à 100% ci-dessus définies est un motif B3), en particulier une diamine aliphatique.

Ladite composition est plus particulièrement une composition pour matériau thermoplastique. Cela signifie qu'elle permet l'obtention d'un matériau thermoplastique par injection ou injection moulage.

Selon une première possibilité dans le procédé de l'invention, ladite composition de l'invention, ledit polyamide, qu'il soit polymère ou prépolymère, comprend ledit motif amide selon C, différent de A et de B ou le motif C comme défini ci-haut est présent et en remplacement partiel de B et à un taux molaire allant jusqu'à 25%, de préférence jusqu'à 20%, plus préférentiellement jusqu'à 15% par rapport audit motif B.

Avantageusement, les compositions comprenant ou constituées des motifs A et B, la somme des taux molaires de A + B étant égale à 100% ci-dessus définies comprennent également un motif C en remplacement partiel de B et à un taux molaire allant jusqu'à 25%, par rapport audit motif B.

Avantageusement, les compositions comprenant ou constituées des motifs A et B, la somme des taux molaires de A + B étant égale à 100% ci-dessus définies comprennent également un motif C en remplacement partiel de B et à un taux molaire allant jusqu'à 20%, par rapport audit motif B.

Avantageusement, les compositions comprenant ou constituées des motifs A et B, la somme des taux molaires de A + B étant égale à 100% ci-dessus définies comprennent également un motif C en remplacement partiel de B et à un taux molaire allant jusqu'à 15% par rapport audit motif B.

Quand le motif C est présent et qu'il correspond à x'T avec x' comme défini ci-haut pour le motif B, dans ce cas C étant différent de B par définition, ledit motif C peut être à base x' étant défini selon B1 et dans ce cas ledit motif B peut avoir x' défini selon soit B2 soit B3. Si C est à base de x' selon B2, dans ce cas le motif B peut être à base de x' étant selon B1 ou B3. Si C est à base de x' selon B3, dans ce cas le motif B peut être à base de x' étant défini selon B1 ou B2.

Plus particulièrement, dans ce motif C de ladite composition, ladite structure aromatique peut être choisie par exemple parmi la structure isophtalique et/ou naphtalènique. Une structure téréphtalique est possible en particulier pour le composant diacide quand la diamine est cycloaliphatique. Ladite structure cycloaliphatique peut être choisie parmi une structure à base de cycle cyclohexane ou une structure à base de cycle décahydronaphtalénique (structure naphtalénique hydrogénée).

De préférence, la structure de C est dérivée d'une diamine aliphatique et d'un diacide cycloaliphatique et/ou aromatique, par exemple comme définis ci-dessus ou d'un diacide et d'une diamine cycloaliphatique, par exemple comme définis ci-dessus. Plus particulièrement, ledit motif C est choisi parmi les motifs issus :
- d'une diamine cycloaliphatique et d'acide téréphtalique ou
- de diacide choisi parmi isophtalique, naphténique ou à base de cyclohexane et de diamine x ou x' comme définies ci-haut pour les motifs A et B respectivement.

Selon une autre variante de la composition de l'invention, ledit motif D est présent et en remplacement partiel de B à un taux molaire pouvant aller jusqu'à 70%, en particulier jusqu'à 60%, notamment jusqu'à 50%, de préférence jusqu'à 15% par rapport audit motif B. Donc, selon cette variante, ladite composition comprend ledit motif D comme défini ci-haut, en particulier choisi parmi : les aminoacides ou lactames en C₆ à C₁₂, de préférence en C₆, C₁₁ et C₁₂ ou leurs mélanges ou les motifs issus de la réaction d'un diacide aliphatique linéaire en C₆ à C₁₈, de préférence C₆ à C₁₂ et d'une diamine aliphatique linéaire en C₆ à C₁₈, de préférence C₆ à C₁₂ et de préférence avec les motifs A et B étant respectivement à base des diamines x et x' comme définies ci-haut.

Avantageusement, les compositions comprenant ou constituées des motifs A et B, la somme des taux molaires de A + B étant égale à 100% ci-dessus définies comprennent également un motif D en remplacement partiel de B et à un taux molaire allant jusqu'à 70%, par rapport audit motif B.

Avantageusement, les compositions comprenant ou constituées des motifs A et B, la somme des taux molaires de A + B étant égale à 100% ci-dessus définies comprennent également un motif D en remplacement partiel de B et à un taux molaire allant jusqu'à 60%, par rapport audit motif B.

Avantageusement, les compositions comprenant ou constituées des motifs A et B, la somme des taux molaires de A + B étant égale à 100% ci-dessus définies comprennent également un motif D en remplacement partiel de B et à un taux molaire allant jusqu'à 50%, par rapport audit motif B.

Avantageusement, les compositions comprenant ou constituées des motifs A et B, la somme des taux molaires de A + B étant égale à 100% ci-dessus définies comprennent également un motif D en remplacement partiel de B et à un taux molaire allant jusqu'à 15% par rapport audit motif B.

De préférence, le motif C et/ou D, quand il est présent, remplace partiellement le motif B avec un taux molaire (C + D) jusqu'à 70%, en particulier jusqu'à 60% et de préférence inférieur à 40% par rapport au taux molaire dudit motif B comme défini selon l'invention. Donc, une partie du motif B tel que défini selon l'invention qui représente moins de 50%, de préférence moins de 40% en mol par rapport à B, peut être remplacée par un motif C et/ou D comme définis ci-dessus selon l'invention.

Avantageusement, les compositions comprenant ou constituées des motifs A et B, la somme des taux molaires de A + B étant égale à 100% ci-dessus définies comprennent également un motif C et un motif D en remplacement partiel de B et à un taux molaire allant jusqu'à 70%, par rapport audit motif B.

Avantageusement, les compositions comprenant ou constituées des motifs A et B, la somme des taux molaires de A + B étant égale à 100% ci-dessus définies comprennent également un motif C et un motif D en remplacement partiel de B et à un taux molaire allant jusqu'à 60%, par rapport audit motif B.

Avantageusement, les compositions comprenant ou constituées des motifs A et B, la somme des taux molaires de A + B étant égale à 100% ci-dessus définies comprennent également un motif C et un motif D en remplacement partiel de B et à un taux molaire inférieur à 40%, par rapport audit motif B.

Avantageusement, dans les compostions comprenant ou constituées de A, B, C et D, C, le motif C en remplacement partiel de B est à un taux molaire allant jusqu'à 25% par rapport audit motif B et le motif D en remplacement partiel de B est à un taux molaire allant jusqu'à 70% par rapport audit motif B.

Avantageusement, dans les compostions comprenant ou constituées de A, B, C et D, C, le motif C en remplacement partiel de B est à un taux molaire allant jusqu'à 25% par rapport audit motif B et le motif D en remplacement partiel de B est à un taux molaire allant jusqu'à 60% par rapport audit motif B.

Avantageusement, dans les compostions comprenant ou constituées de A, B, C et D, C, le motif C en remplacement partiel de B est à un taux molaire allant jusqu'à 25% par rapport audit motif B et le motif D en remplacement partiel de B est à un taux molaire allant jusqu'à 50% par rapport audit motif B.

Avantageusement, dans les compostions comprenant ou constituées de A, B, C et D, C, le motif C en remplacement partiel de B est à un taux molaire allant jusqu'à 20% par rapport audit motif B et le motif D en remplacement partiel de B est à un taux molaire allant jusqu'à 70% par rapport audit motif B.

Avantageusement, dans les compostions comprenant ou constituées de A, B, C et D, C, le motif C en remplacement partiel de B est à un taux molaire allant jusqu'à 20% par rapport audit motif B et le motif D en remplacement partiel de B est à un taux molaire allant jusqu'à 60% par rapport audit motif B.

Avantageusement, dans les compostions comprenant ou constituées de A, B, C et D, C, le motif C en remplacement partiel de B est à un taux molaire allant jusqu'à 20% par rapport audit motif B et le motif D en remplacement partiel de B est à un taux molaire allant jusqu'à 50% par rapport audit motif B.

Avantageusement, dans les compostions comprenant ou constituées de A, B, C et D, C, le motif C en remplacement partiel de B est à un taux molaire allant jusqu'à 15% par rapport audit motif B et le motif D en remplacement partiel de B est à un taux molaire allant jusqu'à 70% par rapport audit motif B.

Avantageusement, dans les compostions comprenant ou constituées de A, B, C et D, C, le motif C en remplacement partiel de B est à un taux molaire allant jusqu'à 15% par rapport audit motif B et le motif D en remplacement partiel de B est à un taux molaire allant jusqu'à 60% par rapport audit motif B.

Avantageusement, dans les compostions comprenant ou constituées de A, B, C et D, C, le motif C en remplacement partiel de B est à un taux molaire allant jusqu'à 15% par rapport audit motif B et le motif D en remplacement partiel de B est à un taux molaire allant jusqu'à 50% par rapport audit motif B.

Avantageusement, dans les compostions comprenant ou constituées de A, B, C et D, C, le motif C en remplacement partiel de B est à un taux molaire allant jusqu'à 25% par rapport audit motif B et le motif D en remplacement partiel de B est à un taux molaire allant jusqu'à 15% par rapport audit motif B.

Avantageusement, dans les compostions comprenant ou constituées de A, B, C et D, C, le motif C en remplacement partiel de B est à un taux molaire allant jusqu'à 20% par rapport audit motif B et le motif D en remplacement partiel de B est à un taux molaire allant jusqu'à 15% par rapport audit motif B.

Avantageusement, dans les compostions comprenant ou constituées de A, B, C et D, C, le motif C en remplacement partiel de B est à un taux molaire allant jusqu'à 15% par rapport audit motif B et le motif D en remplacement partiel de B est à un taux molaire allant jusqu'à 15% par rapport audit motif B.

Plus particulièrement, la différence Tf-Tc, entre la température de fusion Tf et la température de cristallisation Tc dudit polymère (polyamide) matrice, ne dépasse pas 50°C, de préférence ne dépasse pas 40°C et plus particulièrement ne dépasse pas 30°C.

En particulier, Tf-Tc ne dépasse pas 30°C sauf si Tf-Tg est inférieur à 150°C, auquel cas Tf-Tc peut aller jusqu'à 50°C.

L'enthalpie de cristallisation dudit polymère de matrice, mesurée en Calorimétrie Différentielle à Balayage (DSC) selon la Norme ISO 11357-3 :2013, est supérieure à 40 J/g, de préférence supérieure à 45 J/g.

De préférence, ledit motif amide A, comme défini selon l'invention ci-haut et ci-après, est présent à un taux molaire allant de 55 à 80%, plus préférentiellement de 55 à 75%, encore plus préférentiellement de 55 à 70%, par rapport à l'ensemble des motifs dudit polymère matrice (polyamide) tel que défini ci-haut selon l'invention.

Selon une première option préférée dans le procédé selon l'invention décrit ci-haut, ladite composition a un motif B avec x' défini selon l'option B1 décrite ci-haut, en particulier avec comme diamine plus préférée pour ledit motif B, étant la MPMD. Le motif A reste comme défini ci-haut, c'est-à-dire x.T, avec x une diamine aliphatique linéaire en C₉ à C₁₈, de préférence C₉, C₁₀, C₁₁ ou C₁₂.

Selon une deuxième option préférée dans le procédé selon l'invention, ladite composition a un motif B où x' est la MXD selon option B2 définie ci-haut. Le motif A reste comme défini pour la première option citée. Cette seconde option constitue ensemble avec la première citée ci-dessus les plus préférées de l'invention et en particulier cette seconde option est la plus préférée de l'invention.

Une troisième option préférée est celle où B est défini selon l'option B1 ou B2 ou B3 comme définie ci-haut et avec présence d'un motif C comme défini ci-haut en remplacement de B et jusqu'à 25%, de préférence jusqu'à 20%, plus préférentiellement jusqu'à 15% en moles et en particulier avec B étant défini selon l'option première ou seconde comme définie ci-haut.

Plus préférentiellement encore, ladite composition de polyamide est basée sur les motifs A et B sélectionnés comme suit :
- pour le motif A étant 9T, ledit motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T , plus préférentiellement MPMD.T ou MXD.T, avec un taux molaire de B allant de 30 à 45%,
- pour le motif A étant 10T, ledit motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%,
- pour le motif A étant 11T, ledit motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%,
- pour le motif A étant 12T, ledit motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

Selon cette sélection, dans le procédé selon l'invention une première composition plus particulière peut être définie, avec le motif A étant un motif 9T et le motif B étant sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%. Une deuxième composition particulière correspond à un motif A étant un motif 10T et le motif B étant sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%. Une troisième composition particulière correspond à un motif A étant un motif 11T et le motif B étant sélectionné parmi : 9T, 10T, 12T, 13T, 14T, 15T, 16T, 17T et 18T, MPMD.T et MXD.T, de préférence, 9T, 13T, 15T, 16T, 17T et 18T, MPMD.T et MXD.T, plus préférentiellement MPMD.T ou MXD.T, avec un taux molaire de B allant de 20 à 45%. Finalement, une autre composition particulière correspond à un motif A étant un motif 12T et le motif B étant sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

En ce qui concerne la réactivité ou non de ladite composition de polyamide, selon une première option, ladite composition de polyamide peut être une composition non réactive selon b). Cela signifie que ladite composition est la même que celle du polymère (polyamide) de matrice dudit matériau car il y a absence de réaction dans cette composition, laquelle reste stable et non évolutive en terme de masse moléculaire lors de son chauffage pour la mise en oeuvre du matériau de l'invention. Les caractéristiques du polymère polyamide dans cette composition sont les mêmes, avec Tg et Tf comme définies déjà ci-haut, que celles du polymère final qui est le polyamide semi-cristallin obtenu par une composition réactive a) (voir ci-dessous), ledit polymère constituant par définition ladite matrice thermoplastique dudit matériau. Les polyamides selon b) sont obtenus par réaction classique de polycondensation à partir des composants monomères qui sont des diamines, diacides et éventuellement des aminoacides ou lactames, avec la proportion et nature des monomères étant choisies en fonction des motifs sélectionnés de l'invention, A et B et éventuellement C et D.

La masse moléculaire moyenne en nombre Mn dudit polymère (polyamide) final de la matrice thermoplastique dudit matériau est de préférence dans une plage allant de 10000 à 40000, de préférence de 12000 à 30000. Ces valeurs Mn peuvent correspondre à des viscosités inhérentes supérieures ou égales à 0,8. Ces polyamides selon la composition b) sont non réactifs, soit par le faible taux de fonctions (résiduelles) réactives présentes, en particulier avec un taux desdites fonctions < 120 meq/kg, soit par la présence du même type de fonctions terminales en bout de chaîne et donc non réactives entre elles, soit par la modification et blocage desdites fonctions réactives par un composant réactif monofonctionnel, par exemple pour les fonctions amines par réaction de modification avec un monoacide ou un monoisocyanate et pour des fonctions carboxy par réaction avec une monoamine. Quand ledit polymère final de matrice est issu d'un prépolymère réactif dans une composition précurseur réactive a), ce prépolymère réactif a une Mn d'au moins deux fois inférieure à celle dudit polymère final de matrice.

Selon une deuxième option, ladite composition de polyamide peut être une composition réactive de prépolymère selon a) et précurseur ou composition précurseur dudit polymère polyamide de ladite matrice du matériau.

Dans cette deuxième option, selon la composition réactive a), on peut distinguer trois possibilités plus particulières. Selon une première possibilité, ladite composition a) peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, avec X' et Y' étant amine et carboxy ou carboxy et amine respectivement. Selon une deuxième possibilité, ladite composition réactive a) peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement. Cette réaction de condensation (ou de polycondensation) peut provoquer l'élimination de sous-produits. Ceux-ci peuvent être éliminés en travaillant de préférence selon un procédé utilisant une technologie de moule ouvert. Dans le cas d'un procédé en moule fermé, une étape de dégazage, de préférence sous vide, des sous-produits éliminés par la réaction est présente, ceci afin d'éviter la formation de microbulles des sous-produits dans le matériau final, qui (microbulles) peuvent affecter les performances mécaniques dudit matériau si elles ne sont pas éliminées ainsi. Selon une troisième option de composition réactive a), ladite composition a) ou composition précurseur a) peut comprendre ou être constituée de :
a1) au moins un prépolymère dudit polymère polyamide thermoplastique (de la matrice) comme déjà défini ci-haut avec ce prépolymère porteur de n fonctions réactives terminales X, identiques choisies parmi : -NH₂ (amine), -CO₂H (carboxy) et -OH (hydroxyle), de préférence -NH₂ (amine) et -CO₂H (carboxy), avec n étant 1 à 3, de préférence de 1 à 2, plus préférentiellement 1 ou 2, plus particulièrement 2
a2) au moins un allongeur de chaîne Y-A'-Y, avec A' étant un biradical hydrocarboné de structure non polymérique (ni polymère ni oligomère ni prépolymère), porteur de 2 fonctions réactives terminales Y identiques, réactives par polyaddition (sans élimination de sous-produit de réaction), avec au moins une fonction X dudit prépolymère a1), de préférence de masse moléculaire inférieure à 500 et plus préférentiellement inférieure à 400. NH₂ (amine) signifie amine primaire et secondaire.

Dans ce dernier cas (troisième option), la structure semi-cristalline dudit polymère polyamide de la matrice dudit matériau est essentiellement apportée par la structure dudit prépolymère a1) qui est également semi-cristallin.

Comme exemples convenables d'allongeurs a2) en fonction des fonctions X portées par ledit prépolymère polyamide semi-cristallin a1), on peut citer les suivants :
- lorsque X est NH₂ ou OH de préférence NH₂ :
   o soit l'allongeur de chaîne Y-A'-Y correspond à
      ▪ Y choisi parmi les groupements : maléimide, isocyanate éventuellement bloqué, oxazinone et oxazolinone, anhydride cyclique, de préférence oxazinone et oxazolinone
         et
      ▪ A' est un espaceur carboné ou radical carboné portant les fonctions ou groupements réactifs Y, choisi parmi :
         - une liaison covalente entre deux fonctions (groupements) Y dans le cas où Y = oxazinone et oxazolinone ou
         - une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire de 14 à 200 g.mol⁻¹
   ∘ soit l'allongeur de chaîne Y-A'-Y correspond à Y étant un groupement caprolactame et à A' pouvant être un radical carbonyle tel que le carbonyl biscaprolactame ou à A' pouvant être un téréphtaloyle ou un isophtaloyle,
   o soit ledit allongeur de chaîne Y-A'-Y porte un groupement Y d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
      et
- lorsque X est COOH :
   o ledit allongeur de chaîne Y-A'-Y correspond à :
      ▪ Y choisi parmi les groupements : oxazoline, oxazine, imidazoline, aziridine, comme le 1, 1 '-iso- ou téré- phtaloyl-bis (2-methyl aziridine), ou époxy
      ▪ A' étant un espaceur (radical) carboné tel que défini ci-dessus.

Plus particulièrement, quand dans ledit allongeur Y-A'-Y, ladite fonction Y est choisie parmi oxazinone, oxazolinone, oxazine, oxazoline ou imidazoline, dans ce cas, dans l'allongeur de chaîne représenté par Y-A'-Y, A' peut représenter un alkylène tel que -(CH₂)ₘ- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas où Y est un époxy, l'allongeur de chaîne peut être choisi parmi : le bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters_de diacide carboxylique tel que le glycidyl ester d'acide téréphtalique ou les dioléfines (diènes) époxydées ou acides gras à double insaturation éthylénique époxydée, le diglycidyl 1,2-Cyclohexanedicarboxylate ;_et leurs mélanges.

Avantageusement, X est NH₂ ou OH, en particulier NH₂ et Y est choisi parmi une oxazinone et une oxazolinone.

Avantageusement,X est CO₂H et Y est choisi parmi un epoxy et une oxazoline.

Plus avantageusement, X est CO₂H et Y-A'-Y est choisi parmi les phénylènes bis oxazolines, de préférence la 1,3 - phénylène-bis(2-oxazoline) ou la 1,4-phénylène-bis(2-oxazoline) (PBO).

Dans le cas du carbonyl- ou térephtaloyl- ou isophtaloyl- biscaprolactame comme allongeur de chaîne Y-A'-Y, les conditions préférées évitent l'élimination de sous-produit, comme le caprolactame lors de ladite polymérisation et mise en oeuvre à l'état fondu.

Dans le cas éventuel cité ci-haut où Y représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère P(X)n où X = NH₂, les conditions préférées évitent toute formation de cycle imide lors de la polymérisation et lors la mise en oeuvre à l'état fondu.

Pour X = OH ou NH₂, le groupement Y est choisi de préférence parmi : isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y imidazoline convenables à la mise en oeuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A' pouvant être une simple liaison covalente avec pour allongeurs correspondants respectifs étant : bis- (benzoxazinone), bisoxazinone et bisoxazolinone.

A' peut être également un alkylène en C₁ à C₁₄, de préférence en C₂ à C₁₀ mais de préférence A' est un arylène et plus particulièrement il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1, 1' isophtaloyl-bis(2-méthyl aziridine).

La présence d'un catalyseur de la réaction entre ledit prépolymère P(X)n et ledit allongeur Y-A'-Y à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a une structure non polymérique et de préférence une masse moléculaire inférieure à 500, plus préférentiellement inférieure à 400.

Lesdits prépolymères réactifs de ladite composition réactive a), selon les trois options citées plus haut, ont une masse moléculaire moyenne en nombre Mn allant de 500 à 10000, de préférence de 1000 à 6000 déterminée en particulier par le calcul à partir du taux des fonctions terminales déterminé par titration potentiométrique en solution et la fonctionnalité desdits prépolymères. Les masses Mn peuvent également déterminées par chromatographie d'exclusion stérique ou par RMN.

Le taux dedit allongeur dans le dit polymère polyamide varie de 1 à 20%, en particulier de 5 à 20%.

Dans le procédé de l'invention et dans le cas des compositions réactives selon définition a), lesdits prépolymères réactifs sont préparés par réaction classique de polycondensation entre les composants diamines et diacides correspondants et éventuellement (en fonction du motif D) aminoacides ou lactames en respectant la nature et proportions des motifs A et B et éventuellement C et D. Les prépolymères portant des fonctions X' et Y' amine et carboxy sur la même chaîne peuvent être obtenus par exemple en ajoutant une combinaison de monomères (aminoacide, diamine, diacide) présentant au total une quantité égale de motifs amine et carboxy. Une autre voie d'obtention de ces prépolymères porteurs d'une fonction X' et une Y' est, par exemple, en associant un prépolymère portant 2 fonctions identiques X' = amine, avec un prépolymère diacide porteur de Y' : carboxy, avec un taux molaire global en fonctions acides égal à celui des fonctions amines X' de départ.

Pour l'obtention de prépolymères fonctionnalisés avec des fonctions identiques (amines ou carboxy) sur la même chaîne, il suffit d'avoir un excès de diamine (ou de fonctions amines globalement) pour avoir des fonctions terminales amines ou excès de diacide (ou de fonctions carboxy globalement) pour avoir des fonctions terminales carboxy.

Dans le cas d'un prépolymère P(X)n avec n fonctions X identiques, la fonctionnalité 1 peut être obtenue en présence d'un composant monofonctionnel bloquant (monoacide ou monoamine en fonction de la nature de X = amine ou carboxy).

Une fonctionnalité n = 2 peut être obtenue à partir de composants difonctionnels : diamines et diacides avec excès de l'un pour fixer X en fonction de cet excès.

Pour n = 3 par exemple, pour un prépolymère P(X)n, il faut la présence d'un composant trifonctionnel, par exemple présence d'une triamine (une mole par chaîne de prépolymère) avec une diamine dans la réaction avec un diacide. La fonctionnalité préférée pour P(X)n est n = 2.

L'expression « fibres de renfort » désigne un assemblage de fibres, courtes ou longues, par exemple les fibres minérales, les fibres polymériques ou un mélange de celles-ci et la composition utilisée dans le procédé de l'invention en est donc dépourvue.

Plus particulièrement, le procédé de l'invention est un procédé d'injection ou d'injection moulage d'une composition telle que définie ci-dessus. Ladite composition peut comprendre des charges et additifs autres que des fibres de renfort.

Parmi les charges convenables, on peut citer par exemple : les charges minérales ou organiques : le noir de carbone, nanotubes de carbone (NTC), nanofibrilles de carbone, billes de verre, polymères recyclés broyés à l'état de poudre.

Parmi les additifs convenables, on peut citer : des additifs absorbant dans l'UV ou IR de façon à permettre le soudage du matériau obtenu, par une technologie laser (UV ou IR) et des stabilisants thermiques choisis parmi les antioxydants de type phénols stériquement encombrés ou amines stériquement encombrées (HALS). La fonction de ces stabilisants est de prévenir l'oxydation thermique et la photoxydation et dégradation conséquente du polyamide matrice du matériau obtenu.

Avantageusement, le procédé de l'invention injection ou injection moulage, d'une composition telle que définie ci-dessus comprend, au moins une étape de polymérisation d'au moins une composition réactive a) telle que définie ci-haut selon l'invention ou une étape de moulage ou de mise en oeuvre d'au moins une composition non réactive b) telle que définie ci-haut selon l'invention.

Plus particulièrement, ledit procédé peut comprendre les étapes suivantes :
i) injection d'une composition dépourvue de renfort fibreux telle que définie ci-haut selon l'invention dans un moule ouvert ou fermé ou hors moule,
ii) réaction de polymérisation par chauffage de ladite composition de l'étape i), dans le cas d'une composition réactive a) de polyamide comme définie selon l'invention, avec allongement de chaîne (augmentation de masse moléculaire), suivant le cas, par réaction de polycondensation (y compris autocondensation d'un même prépolymère), soit par réaction de polyaddition en masse à l'état fondu, avec dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule,
iii) mise en en oeuvre ou moulage de ladite composition de l'étape i), dans le cas d'une composition de polyamide non réactive b) comme définie selon l'invention, pour former la pièce finale dans un moule ou avec un autre système de mise en oeuvre et dans le cas d'une composition réactive a) une étape de mise en oeuvre par moulage ou par un autre système de mise en oeuvre et simultanément avec l'étape ii) de polymérisation.

Dans ledit procédé selon l'invention, ladite mise en oeuvre peut être réalisée de préférence selon un procédé RIM, injection-compression, en particulier dans le cas d'une composition réactive a).

La composition telle que définie ci-haut ou l'utilisation d'un polymère polyamide semi-cristallin non réactif tel que défini selon ladite composition b) ou un polymère susceptible d'être obtenu à partir d'une composition réactive telle que définie selon ladite composition a) peut être utilisée pour la fabrication d'un matériau thermoplastique, plus particulièrement d'une pièce mécanique, tel que tuyau monocouche ou multicouche, ou de film à base de ladite composition ou dudit matériau.

Lesdites pièces mécaniques dudit matériau concernent des applications dans le domaine de l'automobile, de l'électrique ou l'électronique, ferroviaire, marin, de l'éolien, photovoltaïque, solaire, y compris panneaux solaires et composants de centrales solaires, du sport, aéronautique et spatial, transport routier (concernant les camions), du bâtiment, génie civil, des panneaux ou des loisirs.

Avantageusement, lesdites pièces pour des applications dans l'automobile sont des pièces sous capot moteur pour le transport de fluide, notamment dans des dispositifs d'admission d'air, de refroidissement (par exemple par air, liquide de refroidissement,...), de transport ou transfert de carburants ou de fluides (tels que huile, eau,...).

Avantageusement, lesdites pièces mécaniques pour des applications dans l'électrique ou l'électronique sont biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias. Ces éléments de biens d'équipements électriques et électroniques couvrent non seulement les parties structurelles de tels biens (boîtiers, coques...) mais également leurs éventuels accessoires associés (écouteurs, éléments de connectique, câbles...).

Plus particulièrement, on peut distinguer trois applications plus préférées en fonction de la température d'utilisation desdites pièces en matériau :
- dans l'éolien, avec une Tg dudit polyamide matrice thermoplastique d'au moins 90°C
- dans l'automobile, avec une Tg dudit polyamide d'au moins 100°C
- dans l'aéronautique, avec une Tg dudit polyamide d'au moins 120°C.

Cela signifie que pour une Tg d'au moins 100°C, il peut avoir deux applications possibles : automobile et éolien et si la Tg est d'au moins 120°C en plus de l'aéronautique comme application, on peut également avoir l'éolien et l'automobile.

Une pièce mécanique de matériau thermoplastique résultant de l'utilisation d'au moins une composition comme définie ci-haut ou de l'utilisation d'un polymère polyamide semi-cristallin non réactif tel que défini selon ladite composition b) ou un polymère susceptible d'être obtenu à partir d'une composition réactive telle que définie selon ladite composition a) ou d'un matériau thermoplastique tel que défini ci-avant ou obtenue par un procédé tel que défini ci-haut peut être une pièce pour éolienne, en particulier avec une Tg d'au moins 100 °C ou une pièce pour l'aéronautique, en particulier avec une Tg d'au moins 120°C.

Elle peut être une pièce mécanique pour des applications dans l'automobile telles que des pièces sous capot moteur pour le transport de fluide, notamment dans des dispositifs d'admission d'air, de refroidissement (par exemple par air, liquide de refroidissement,...), de transport ou transfert de carburants ou de fluides (tels que huile, eau,...).

Elle peut être une pièce mécanique pour des applications dans l'électrique ou l'électronique telles que des biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias.

### Méthodes de détermination des caractéristiques citées

- La viscosité à l'état fondu du prépolymère ou de la composition précurseur est mesurée suivant le manuel de référence du constructeur de l'appareil de mesure utilisé, qui est un rhéomètre Physica MCR301, sous balayage d'azote à la température donnée sous cisaillement de 100 s⁻¹, entre deux plans parallèles de diamètre de 50 mm.
- La Mn du prépolymère ou du polymère thermoplastique est déterminée à partir de la titration (dosage) des fonctions terminales selon une méthode potentiométrique (dosage direct pour NH₂ ou carboxy) et à partir de la fonctionnalité théorique qui est de 2 (en fonctions terminales) pour prépolymères et polymères linéaires préparés à partir de monomères bifonctionnels seuls.
- La mesure de la viscosité intrinsèque ou inhérente est réalisée dans le m-crésol. La méthode est bien connue de l'homme du métier. On suit la norme ISO 307 :2007 mais en changeant le solvant (utilisation du m-crésol à la place de l'acide sulfurique, la température (20°C), et la concentration (0.5% massique).
- La température de transition vitreuse Tg des polymères thermoplastiques utilisés est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.
- La température de fusion Tf et la température de cristallisation Tc sont mesurées par DSC, après une première chauffe, selon la norme ISO 11357-3 :2013. La vitesse de chauffage et de refroidissement est de 20°C/min.
- L'enthalpie de cristallisation dudit polymère de matrice est mesurée en Calorimétrie Différentielle à Balayage (DSC) selon la norme ISO 11357-3 :2013.

### Exemples

### A - Préparation d'un polymère polyamide par voie directe (sans allongement de chaîne d'un prépolymère réactif)

Dans un réacteur autoclave de 14 litres, on introduit 5 kg des matières premières suivantes :
- 500 g d'eau,
- la ou les diamines,
- l'aminoacide (éventuellement),
- le ou les diacides,
- le régulateur de chaîne monofonctionnel : acide benzoïque en quantité adaptée à la Mn visée et variant (acide benzoïque) de 50 à 100 g,
- 35 g d'hypophosphite de sodium en solution,
- 0,1 g d'un antimousse WACKER AK1000 (société Wacker Silicones).

La nature et rapports molaires des motifs et structures moléculaires des polyamides (par essai référencé) sont donnés au tableau 1 ci-dessous.

Le réacteur fermé est purgé de son oxygène résiduel puis chauffé à une température de 230°C par rapport à la matière introduite. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

La polymérisation est ensuite poursuivie sous balayage d'azote de 20 l/h jusqu'à obtention de la masse Mn visée indiquée au tableau de caractéristiques.

Le polymère est ensuite vidangé par la vanne de fond puis refroidi dans un bac d'eau puis mis sous forme de granulés.

Les résultats sont présentés dans le tableau 1 suivant.

**Tableau 1 : Caractéristiques des polymères préparés par voie directe sans prépolymère réactif**

| Réf | Type essai | Structure moléculaire / Composition molaire | Tf (°C) / Tg (°C) | Tf-Tg (°C) | Tc (°C) | Tf-Tc (°C) | ΔHc (J/g) | Viscosité inhérente (m-crésol) | Fins de chaînes non réactives meq/kg(**) (calc) | Indice acide meq/kg | Indice amine meq/kg | Mn g/ mole |
|---|---|---|---|---|---|---|---|---|---|---|---|---|
| 1 | Comparatif, (EP1988 113) | 10.T/6.T (59/41) | 281/122 | 159 | 236 | 45 | 44 | 1,12 | 103 | 45 | 60 | 9600 |
| 2 | Comparatif, (EP198811) | 10.T/6.T/11 (60/24/16) | 269/111 | 158 | 220 | 49 | 39 | 1,25 | 91 | 55 | 48 | 10300 |
| 3 | Comparatif, (WO 2011/00393) | 10.T/TMD.T (59/41) | 263/133 | 130 | 197 | 66 | 35 | 1,15 | 97 | 63 | 35 | 10250 |
| 4 | Comparatif | 10.T (100) | 314/120 | 194 | 279 | 35 | 63 | insoluble | 154 | 54 | 22 | 8700 |
| 5 | Comparatif | 10.T/11 (67/33) | 269/84 | 185 | 232 | 37 | 50 | 1,19 | 119 | 55 | 40 | 9350 |
| 6 | Comparatif | 10.T/11 (59/41) | 261/78 | 183 | 213 | 48 | 39 | 1,15 | 112 | 22 | 34 | 11900 |
| 7 | Comparatif | 10.T/10.I (67/33) | 269/110 | 159 | 205 | 64 | 32 | 1,12 | 97 | 48 | 51 | 10100 |
| 8 | Comparatif | MXD.T/11 (59/41) | 211/111 | 100 | (*) | > 100 | 12 | 1,25 | | | | |
| 9 | Comparatif | MPMD.T/11 (59/41) | - / 84 | - | (*) | - | - | 1,14 | | | | |
| 10 | Selon l'invention | 10.T/MXD.T (67/33) | 270/130 | 140 | 244 | 26 | 47 | 1,03 | 143 | 85 | 42 | 7400 |
| 11 | Selon l'invention | 10.T/MXD.T (59/41) | 269/131 | 138 | 241 | 28 | 44 | 1,01 | 100 | 134 | 38 | 7350 |
| 12 | Comparatif, hors invention | 10.T/MXD.T (50/50) | 262/137 | 125 | 211 | 51 | 17 | 0,99 | 136 | 97 | 37 | 7400 |
| 13 | Selon l'invention | 10.T/MPMD.T (67/33) | 270/124 | 146 | 230 | 40 | 45 | 1,05 | 139 | 63 | 42 | 8200 |
| 14 | Selon l'invention | 10.T/MPMD.T (59/41) | 264/126 | 138 | 219 | 45 | 40 | 1,11 | 155 | 59 | 27 | 8300 |
| 15 | Comparatif, hors invention | 10.T/MPMD.T (50/50) | 245/127 | 118 | 185 | 60 | 22 | 1,12 | | | | |
| 16 | Comparatif, hors invention | 10.T/12.T (59/41) | 280/114 | 166 | 260 | 20 | 62 | 0,81 | 0 | 263 | < 10 | 7600 |
| 17 | Selon l'invention | 10.T/12.T/11 (60/24/16) | 271/105 | 166 | 246 | 25 | 56 | 0,98 | 169 | 49 | 32 | 8000 |
| 18 | Selon l'invention | 18.T/MXD.T (71/29) | 264/95 | 169 | 242 | 22 | 47 | 0,86 | 174 | 73 | 35 | 7100 |

| | | | | | | | | | | | | |
|---|---|---|---|---|---|---|---|---|---|---|---|---|
| (*) : Pas de cristallisation au refroidissement (**) : Milliéquivalents par kilogramme | | | | | | | | | | | | |

Les essais représentatifs de l'invention montrent des performances supérieures par rapport aux essais comparatifs hors invention, dont certains représentatifs de l'état de l'art antérieur cité, en particulier en termes d'écart Tf-Tc faible (< 30°C) et pour Tf-Tc allant de 30 à 50°C avec écart Tf-Tg < 150°C.

### B - Préparation d'un polymère polyamide par allongement de chaîne d'un prépolymère ou oligomère) réactif

### B-1 Préparation du prépolymère réactif P(X)n

Dans un réacteur autoclave de 14 litres, on introduit 5 kg des matières premières suivantes :
- 500 g d'eau,
- la ou les diamines,
- l'aminoacide (éventuellement),
- le diacide téréphtalique,
- 35 g d'hypophosphite de sodium en solution,
- 0,1 g d'un antimousse WACKER AK1000 (société Wacker Silicones).

La nature et rapports molaires des motifs et structures moléculaires des polyamides prépolymères réactifs (par essai référencé) sont donnés au tableau 2 ci-dessous.

Le réacteur fermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

L'oligomère (prépolymère) est ensuite vidangé par la vanne de fond puis refroidi dans un bac d'eau puis broyé.

Les caractéristiques sont présentées au tableau 2 suivant.

**Tableau 2 : Caractéristiques des prépolymères préparés**

| Réf | | Structure moléculaire et composition molaire | Tf (°C) | Tg (°C) | Tf-Tg (°C) | Tc (°C) | Tf-Tc (°C) | ΔH (J/g) | Viscosité inhérente (dans m-crésol) | Indice d'acide meq/kg(*) | Indice d'amine meq/kg | Mn g/mole |
|---|---|---|---|---|---|---|---|---|---|---|---|---|
| 19 | Selon l'invention | 10.T/MXD.T (59/41) | 264 | 117 | 147 | 232 | 32 | 42 | 0,32 | 878 | 0 | 2280 |
| 20 | Selon l'invention | 10.T/MPMD.T (59/41) | 265 | 109 | 156 | 221 | 44 | 41 | 0,32 | 858 | 0 | 2330 |

| | | | | | | | | | | | | |
|---|---|---|---|---|---|---|---|---|---|---|---|---|
| (^{∗}) : Milliéquivalents par kilogramme | | | | | | | | | | | | |

### B-2 Préparation du polymère polyamide par allongement de chaîne avec un allongeur type Y-A-Y

10 g de l'oligomère ci-dessus séché et broyé, sont mélangés avec une quantité stœchiométrique de 1,3 phénylène bis-oxazoline (PBO). Le mélange est introduit sous balayage d'azote dans une micro-extrudeuse de marque DSM (de volume 15mL) à vis coniques corotatives préchauffée à 280°C sous rotation des vis à 100 tr/mn. Le mélange est laissé sous recirculation dans la micro-extrudeuse et l'augmentation de la viscosité est suivie par mesure de la force normale. Au bout de 2 minutes environ, un palier est atteint et le contenu de la micro-extrudeuse est vidangé sous forme d'un jonc. Le produit refroidi à l'air est mis sous forme de granulés.

Les résultats des analyses des produits sont présentés au tableau 3 ci-dessous.

**Tableau 3 : Caractéristiques analytiques des polyamides obtenus avec allongement de chaîne**

| Réf | | Structure moléculaire / Composition molaire | Tf (°C) | Tg (°C) | Tf-Tg (°C) | Tc (°C) | Tf-Tc (°C) | ΔH (J/g) | Viscosité inhérente (dans m-crésol) |
|---|---|---|---|---|---|---|---|---|---|
| 21 | Référence (hors inventio | 10.T/MXD.T n) (59/41) | 256 | 135 | 121 | 219 | 37 | 30 | 1,3 |
| 22 | Référence (hors inventic | 10.T/MPMD.T n) (59/41) | 262 | 128 | 134 | 210 | 52 | 36 | 0,82 |

### C - Formulation du matériau dépourvu de fibres de renfort

### C-1 Préparation de la formulation

Les granulés issus de l'étape A sont compoundés sur extrudeuse bi-vis Evolum 32 selon un profil de température plat de 280°C. Le débit est de 40 kg/h et la vitesse de 300 tr/mn. Le polymère (97,3% en poids) et les additifs (0.3% de stérarate de Calcium et 0,4% d'Irganox 1010) sont introduits dans la trémie principale. Les joncs sont refroidis dans l'eau et mis sous forme de granulés.

La composition à base de 10.T/MXDT présente toujours une aptitude à la cristallisation plus élevée associée à une Tg très élevée et en particulier Tf-Tg faible.

### C-2 Propriétés mécaniques (tenue à chaud) avec la température

Les granulés des formulations ci-dessous sont mis sous forme de barreaux 80*10* 4 mm par injection-moulage à l'aide d'une machine Krauss Maffei 60 tonnes B2 équipée d'une vis de diamètre Ø 30 mm. Les échantillons ont été injectés à 260°C dans un moule à 90°C à 130 tr/min (pression matière mesurée de 833 bars). La matière a été maintenue sous pression à 611 bars pendant 15 s, avant un refroidissement du moule en 20 s.

Des tests de flexion 3 points selon la norme ISO 178 sont réalisés à différentes températures sur un dynamomètre Zwick 1. Les rayons du poinçon et des appuis sont de 5 mm. La vitesse est de 2 mm/min et le module est calculé entre 0,05 et 0,25% de déformation.

## Revendications

1. Procédé de fabrication d'un matériau thermoplastique, en particulier d'une pièce mécanique à base dudit matériau, **caractérisé en ce qu'**il comprend au moins une étape de moulage par injection, d'une composition de polyamide pour matériau thermoplastique ou composition de matériau thermoplastique, ledit matériau comprenant une matrice thermoplastique à base d'au moins un polymère thermoplastique, ladite composition étant **caractérisée** :
- **en ce que** ledit polymère thermoplastique de matrice est un polymère polyamide semi-cristallin avec une température de transition vitreuse Tg d'au moins 90°C et avec une température de fusion Tf inférieure ou égale à 280°C, telles que déterminées respectivement selon la norme ISO 11357-2 :2013 et 11357-3 :2013 et l'enthalpie de cristallisation, mesurée en Calorimétrie Différentielle à Balayage (DSC) selon la Norme ISO 11357-3 :2013, est supérieure à 40 J/g, de préférence supérieure à 45 J/g,
- **en ce que** ladite composition, comprend :
a) une composition réactive comprenant ou constitué de, au moins un prépolymère polyamide réactif, ladite composition étant une composition précurseur dudit polymère polyamide de ladite matrice,
ou en alternative à a),
b) une composition non réactive d'au moins un polymère polyamide, y compris le polymère issu de a), ladite composition étant celle de ladite matrice thermoplastique avec la Tg et la Tf étant comme définies ci-dessus, et
- **en ce que** ladite composition a) ou b) comprend ou est constituée de, un ou plusieurs polyamides qui sont des prépolymères selon a) ou qui sont des polymères selon b), lesquels comprennent des motifs amides A et B différents et en option des motifs amides C et D, sélectionnés comme suit :
- A : est un motif amide majoritaire présent à un taux molaire allant de 55 à 95%, de préférence de 55 à 85%, plus préférentiellement de 55 à 80%, choisi parmi les motifs x.T, où x est une diamine aliphatique linéaire en C₉ à C₁₈, de préférence en C₉, C₁₀, C₁₁ et C₁₂ et où T est l'acide téréphtalique,
- B : est un motif amide différent de A, lequel motif B est présent à un taux molaire allant de 5 à 45%, de préférence de 15 à 45%, plus préférentiellement de 20 à 45%, en fonction de la Tf du polyamide à base de motif A et ledit motif amide B est choisi parmi les motifs x'.T où x' est choisi parmi :
∘ B1) une diamine aliphatique ramifiée portant une seule ramification (ou branchement) méthyle ou éthyle et ayant une longueur de chaîne principale différente d'au moins deux atomes de carbone par rapport à la longueur de chaîne principale de la diamine x dudit motif A associé, de préférence x' étant la 2-méthyl pentaméthylène diamine (MPMD) ou
∘ B2) la m-xylylène diamine (MXD) ou
∘ B3) une diamine aliphatique linéaire en C₄ à C₁₈ quand dans le motif A, ladite diamine x est une diamine aliphatique linéaire en C₁₁ à C₁₈ et x' est une diamine en C₉ à C₁₈ quand dans le motif A ladite diamine x est une diamine en C₉ ou C₁₀, de préférence avec une différence d'au moins deux atomes de carbone entre la chaîne de diamine x dudit motif A et la chaîne de diamine x' dudit motif B, sous réserve que le motif B3 est choisi parmi une diamine aliphatique linéaire en C₄, C₅ et C₇ à C₁₈ quand dans ledit motif A, ladite diamine x est une diamine aliphatique linéaire en C₁₂,
et de préférence B étant choisi parmi x'.T, où x' est la MPMD selon B1) ou la MXD selon B2) ou une diamine aliphatique linéaire comme définie ci-haut selon B3) et plus préférentiellement x' est la MPMD selon B1) ou MXD selon B2) et encore plus préférentiellement MXD selon B2),
- C : motif amide optionnel différent de A et de B, choisi parmi les motifs amides à base d'une structure cycloaliphatique et/ou aromatique ou à base de x'T tel que défini ci-haut pour B mais avec x' différent de x' pour le motif B,
- D : motif amide optionnel différent de A, de B et de C quand C est présent et choisi parmi les motifs amides aliphatiques issus de :
▪ aminoacides ou lactames en C₆ à C₁₂, de préférence C₆, C₁₁ et C₁₂ ou leurs mélanges
▪ la réaction d'un diacide aliphatique linéaire en C₆ à C₁₈, de préférence C₆ à C₁₂ et d'une diamine aliphatique linéaire en C₆ à C₁₈, de préférence en C₆ à C₁₂ ou de leur mélanges
et sous la condition que la somme des taux molaires de A + B + C + D soit égale à 100%,
ladite composition étant dépourvue de fibres de renfort.

2. Procédé selon la revendication 1, **caractérisé en ce que** ledit motif amide C est présent et en remplacement partiel de B à un taux molaire allant jusqu'à 25% par rapport audit motif B.

3. Procédé selon l'une des revendications 1 à 2, **caractérisé en ce que** ledit motif D est présent et en remplacement partiel de B à un taux molaire allant jusqu' à 70%, par rapport audit motif B.

4. Procédé selon l'une des revendications 1 à 3, **caractérisé en ce que** la différence Tf-Tc, entre la température de fusion Tf et la température de cristallisation Tc dudit polymère matrice, ne dépasse pas 50°C, de préférence ne dépasse pas 40°C, plus préférentiellement ne dépasse pas 30°C, telles que déterminées selon la norme 11357-3 :2013.

5. Procédé selon l'une des revendications 1 à 4, **caractérisé en ce que** ledit motif amide A est présent avec un taux molaire allant de 55 à 80% de préférence de 55 à 75%, plus préférentiellement de 55 à 70% par rapport à l'ensemble des motifs dudit polymère.

6. Procédé selon l'une des revendications 1 à 5, **caractérisé en ce que** ledit motif B correspond à x'T avec x' choisi selon l'option B1) en particulier avec x' étant MPMD.

7. Procédé selon l'une des revendications 1 à 5, **caractérisé en ce que** ledit motif B correspond à x'T avec x' choisi selon option B2), x' étant la MXD.

8. Procédé selon l'une des revendications 1 à 5, **caractérisé en ce que** ledit motif B correspond à une diamine aliphatique linéaire selon l'option B3).

9. Procédé selon l'une des revendications 1 à 5, **caractérisé en ce que** les motifs A et B sont sélectionnés comme suit :
- pour le motif A étant 9T, ledit motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%
- pour le motif A étant 10T, ledit motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T et MXD.T, plus préférentiellement MPMD.T ou MXD.T, avec un taux molaire de B allant de 25 à 45%
- pour le motif A étant 11T, ledit motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%
- pour le motif A étant 12T, ledit motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

10. Procédé selon la revendication 9, **caractérisé en ce que** le motif A est un motif 9T et le motif B est sélectionné parmi : 10T, 11T, 12T, 13T, 14T, 15T, 16T, 17T et 18T, MPMD.T et MXD.T, de préférence 11T, 12T, 13T, 14T, 15T, 16T, 17T et 18T, MPMD.T et MXD.T, plus préférentiellement MPMD.T ou MXD.T, avec un taux molaire de B allant de 30 à 45%.

11. Procédé selon la revendication 9, **caractérisé en ce que** le motif A est un motif 10T et le motif B est sélectionné parmi : 9T, 11T, 12T, 13T, 14T, 15T, 16T, 17T et 18T, MPMD.T et MXD.T, de préférence 12T, 13T, 14T, 15T, 16T, 17T et 18T, MPMD.T, plus préférentiellement MPMD.T ou MXD.T et MXD.T avec un taux molaire de B allant de 25 à 45%.

12. Procédé selon la revendication 9, **caractérisé en ce que** le motif A est un motif 11T et le motif B est sélectionné parmi : 9T, 10T, 12T, 13T, 14T, 15T, 16T, 17T et 18T, MPMD.T et MXD.T, de préférence 9T, 13T, 15T, 16T, 17T et 18T, MPMD.T et MXD.T, plus préférentiellement MPMD.T ou MXD.T, avec un taux molaire de B allant de 20 à 45%.

13. Procédé selon la revendication 9, **caractérisé en ce que** le motif A est un motif 12T et le motif B est sélectionné parmi : 9T, 10T, 11T, 13T, 14T, 15T, 16T, 17T et 18T, MPMD.T et MXD.T, de préférence 9T, 10T, 14T, 15T, 16T, 17T et 18T, MPMD.T et MXD.T, plus préférentiellement MPMD.T ou MXD.T, avec un taux molaire de B allant de 20 à 45%.

14. Procédé selon l'une des revendications 6 à 13, **caractérisé en ce qu'**une partie du motif B qui est jusqu'à 70%, de préférence moins de 40% mol par rapport à B, est remplacée par un motif C et/ou D comme définis selon l'une des revendications 1 à 3.

15. Procédé selon l'une des revendications 1 à 14, **caractérisé en ce que** ladite composition de polyamide est une composition non réactive selon b).

16. Procédé selon l'une des revendications 1 à 14, **caractérisé en ce que** ladite composition de polyamide est une composition réactive de prépolymère selon a) et précurseur dudit polymère polyamide de ladite matrice du matériau.

17. Procédé selon la revendication 16, **caractérisé en ce que** ladite composition a) comprend ou est constituée de, au moins un prépolymère réactif porteur sur la même chaîne de deux fonctions terminales X' et Y', fonctions respectivement coréactives entre elles par condensation, avec X' et Y' étant amine et carboxy ou carboxy et amine respectivement.

18. Procédé selon la revendication 16, **caractérisé en ce que** ladite composition réactive a) comprend au moins deux prépolymères polyamides réactifs entre eux et porteurs chacun respectivement de deux fonctions terminales identiques X' ou Y', ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

19. Procédé selon la revendication 16, **caractérisé en ce que** ladite composition a) ou composition précurseur, comprend ou est constituée de :
a1) au moins un prépolymère dudit polymère polyamide thermoplastique, porteur de n fonctions réactives terminales X, choisies parmi : -NH₂, -CO₂H et -OH, de préférence NH₂ et -CO₂H avec n étant 1 à 3, de préférence de 1 à 2, plus préférentiellement 1 ou 2, plus particulièrement 2
a2) au moins un allongeur de chaîne Y-A'-Y, avec A' étant un biradical hydrocarboné, de structure non polymérique, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

20. Procédé selon l'une des revendications 16 à 19, **caractérisé en ce que** lesdits prépolymères réactifs de ladite composition a) ont une masse moléculaire moyenne en nombre Mn allant de 500 à 10000, de préférence de 1000 à 6000, telle que déterminée par titration potentiométrique.

21. Procédé selon l'une des revendications 16 à 20, dans laquelle X est NH₂ ou OH, en particulier NH₂ et Y est choisi parmi une oxazinone et une oxazolinone.

22. Procédé selon l'une des revendications 16 à 20, dans laquelle X est CO₂H et Y est choisi parmi un epoxy et une oxazoline.

23. Procédé selon la revendication 22, **caractérisée en ce que** X est CO₂H et Y-A'-Y est choisi parmi les phénylènes bis oxazolines, de préférence la 1,3 - phénylène-bis(2-oxazoline) ou la 1,4-phénylène-bis(2-oxazoline) (PBO).

24. Procédé selon l'une des revendications 1 à 23, **caractérisé en ce qu'**il comprend au moins une étape de polymérisation d'au moins une composition réactive a) telle que définie selon l'une des revendications 16 à 23 ou une étape de moulage ou de mise en oeuvre d'au moins une composition non réactive b) telle que définie selon la revendication 15,.

25. Procédé selon la revendication 24, **caractérisé en ce qu'**il comprend les étapes suivantes :
i) injection d'une composition telle que définie selon l'une des revendications 1 à 24 dépourvue de renfort fibreux dans un moule ouvert ou fermé ou hors moule,
ii) réaction de polymérisation dans le cas d'une composition réactive a) de polyamide selon l'une des revendications 16 à 23, par chauffage de ladite composition de l'étape i) avec allongement de chaîne, suivant le cas, par réaction de polycondensation ou par réaction de polyaddition, en masse à l'état fondu, avec dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule,
iii) une mise en oeuvre ou moulage de ladite composition de l'étape i) dans le cas d'une composition de polyamide non réactive b) pour former la pièce finale dans un moule ou avec un autre système de mise en oeuvre et, dans le cas d'une composition réactive a), une étape de mise en oeuvre par moulage ou par un autre système de mise en oeuvre et simultanément avec l'étape ii) de polymérisation.

26. Procédé selon la revendication 25, caractérisé en ce ladite mise en oeuvre est réalisée selon un procédé RIM, injection-compression en particulier dans le cas d'une composition réactive a).

## Patentansprüche

1. Verfahren zur Herstellung eines thermoplastischen Materials, insbesondere eines mechanischen Teils auf der Basis des Materials, **dadurch gekennzeichnet, dass** es mindestens einen Schritt des Spritzgießens einer Polyamidzusammensetzung für ein thermoplastisches Material oder einer Zusammensetzung von thermoplastischem Material umfasst, wobei das Material eine thermoplastische Matrix auf Basis von mindestens einem thermoplastischen Polymer umfasst, wobei die Zusammensetzung **dadurch gekennzeichnet ist, dass**:
- es sich bei dem thermoplastischen Matrixpolymer um ein teilkristallines Polyamid mit einer Glasübergangstemperatur Tg von mindestens 90 °C und mit einem Schmelzpunkt Tf kleiner oder gleich 280 °C, wie gemäß der ISO-Norm 11357-2:2013 bzw. 11357: 2013 bestimmt, handelt und die durch dynamische Differenzkalorimetrie (DSC) gemäß der ISO-Norm 11357-3:2013 gemessene Kristallisationsenthalpie größer als 40 J/g, vorzugsweise größer als 45 J/g, ist,
- die Zusammensetzung Folgendes umfasst:
a) eine reaktive Zusammensetzung, die mindestens ein reaktives Polyamidprepolymer umfasst oder daraus besteht, wobei es sich bei der Zusammensetzung um eine Vorläuferzusammensetzung des Polyamidpolymers der Matrix handelt,
oder als Alternative zu a)
b) eine unreaktive Zusammensetzung von mindestens einem Polyamidpolymer, das das aus a) resultierende Polymer umfasst, wobei es sich bei der Zusammensetzung um diejenige der thermoplastischen Matrix handelt, wobei die Tg und die Tf wie oben definiert sind, und
- die Zusammensetzung a) oder b) ein oder mehrere Polyamide umfasst oder daraus besteht, bei denen es sich um Prepolymere gemäß a) handelt oder bei denen es sich um Polymere gemäß b) handelt, die Amideinheiten A und B und gegebenenfalls Amideinheiten C und D umfassen, die wie folgt ausgewählt sind:
- A: ist eine überwiegende Amideinheit, die in einem molaren Gehalt im Bereich von 55 bis 95 %, vorzugsweise von 55 bis 85 %, weiter bevorzugt von 55 bis 80 %, vorliegt, ausgewählt aus x.T-Einheiten, wobei x für ein lineares aliphatisches C₉- bis C₁₈- und vorzugsweise C₉-, C₁₀-, C₁₁- und C₁₂-Diamin, steht und wobei T für Terephthalsäure steht,
- B: ist eine von A verschiedene Amideinheit, wobei die Einheit B in einem molaren Gehalt im Bereich von 5 bis 45 %, vorzugsweise von 15 bis 45 %, weiter bevorzugt 20 bis 45 %, in Abhängigkeit von der Tf des Polyamids auf Basis von Einheit A, vorliegt und die Amideinheit B aus x' .T-Einheiten-ausgewählt ist, wobei x' ausgewählt ist aus:
∘ B1) einem verzweigten aliphatischen Diamin mit einer einzigen Methyl- oder Ethylverzweigung und mit einer Hauptkettenlänge, die sich um mindestens zwei Kohlenstoffatome von der Länge der Hauptkette des Diamins x der zugehörigen Einheit A unterscheidet, wobei x' vorzugsweise 2-Methylpentamethylendiamin (MPMD) ist, oder
∘ B2) m-Xylylendiamin (MXD) oder
∘ B3) einem linearen aliphatischen C₄- bis C₁₈-Diamin, wenn es sich in der Einheit A bei dem Diamin x um ein lineares aliphatisches C₁₁- bis C₁₈-Diamin handelt, und x' ein C₉-bis C₁₈-Diamin ist, wenn es sich in der Einheit A bei dem Diamin x um ein C₉- oder C₁₀-Diamin handelt, vorzugsweise mit einer Differenz von mindestens zwei Kohlenstoffatomen zwischen der Kette des Diamins x der Einheit A und der Kette des Diamins x' der Einheit B, mit der Maßgabe, dass die Einheit B3 aus einem linearen aliphatischen C₄-, C₅- und C₇- bis C₁₈-Diamin ausgewählt ist, wenn es sich in der Einheit A bei dem Diamin x um ein lineares aliphatisches C₁₂-Diamin handelt,
und vorzugsweise B aus x'.T ausgewählt ist, wobei x' MPMD gemäß B1) oder MXD gemäß B2 oder ein wie oben gemäß B3) definiertes lineares aliphatisches Diamin ist und weiter bevorzugt x' MPMD gemäß B1) oder MXD gemäß B2) und noch weiter bevorzugt MXD gemäß B2) ist,
- C: fakultative Amideinheit, die von A und von B verschieden ist, ausgewählt aus Amideinheiten auf der Basis einer cycloaliphatischen und/oder aromatischen Struktur und/oder auf der Basis von x'.T gemäß obiger Definition für B, wobei aber x' von x' für die Einheit B verschieden ist,
- D: fakultative Amideinheit, die von A, von B und von C, wenn C vorhanden ist, verschieden ist, und aus den aliphatischen Amideinheiten ausgewählt ist, die aus
▪ C₆- bis C₁₂- und vorzugsweise C₆-, C₁₁- und C₁₂-Aminosäuren oder -Lactamen oder Mischungen davon
▪ der Reaktion einer linearen aliphatischen C₆- bis C₁₈- und vorzugsweise C₆- bis C₁₂-Disäure und einem linearen aliphatischen C₆-bis C₁₈- und vorzugsweise C₆- bis C₁₂-Diamin oder Mischungen davon
resultieren,
und mit der Maßgabe, dass die Summe des molaren Gehalts von A + B + C + D gleich 100 % ist,
wobei die Zusammensetzung frei von Verstärkungsfasern ist.

2. Verfahren nach Anspruch 1, **dadurch gekennzeichnet, dass** die Amideinheit C vorliegt und B in einem molaren Gehalt im Bereich von bis zu 25 %, bezogen auf die Einheit B, teilweise ersetzt.

3. Verfahren nach einem der Ansprüche 1 bis 2, **dadurch gekennzeichnet, dass** die Einheit D vorliegt und B in einem molaren Gehalt im Bereich von bis zu 70 %, bezogen auf die Einheit B, teilweise ersetzt.

4. Verfahren nach einem der Ansprüche 1 bis 3, **dadurch gekennzeichnet, dass** die Differenz Tf-Tc zwischen der Schmelztemperatur Tf und der Kristallisationstemperatur Tc der Polymermatrix nicht über 50 °C, vorzugsweise nicht über 40 °C, weiter bevorzugt nicht über 30 °C, wie gemäß der Norm 11357-3:2013 bestimmt, liegt.

5. Verfahren nach einem der Ansprüche 1 bis 4, **dadurch gekennzeichnet, dass** die Amideinheit A in einem molaren Gehalt im Bereich von 55 bis 80 %, vorzugsweise von 55 bis 75 %, weiter bevorzugt von 55 bis 70 %, bezogen auf die Gesamtheit der Einheiten des Polymers, vorliegt.

6. Verfahren nach einem der Ansprüche 1 bis 5, **dadurch gekennzeichnet, dass** die Einheit B x'.T entspricht, wobei x' gemäß Option B1) ausgewählt ist, insbesondere wobei x' MPMD ist.

7. Verfahren nach einem der Ansprüche 1 bis 5, **dadurch gekennzeichnet, dass** die Einheit B x'.T entspricht, wobei x' gemäß Option B2) ausgewählt ist, wobei x' MXD ist.

8. Verfahren nach einem der Ansprüche 1 bis 5, **dadurch gekennzeichnet, dass** die Einheit B einem linearen aliphatischen Diamin gemäß Option B3) entspricht.

9. Verfahren nach einem der Ansprüche 1 bis 5, **dadurch gekennzeichnet, dass** die Einheiten A und B wie folgt ausgewählt sind:
- für die Einheit A, die 9T ist, ist die Einheit B ausgewählt aus 10T, 11T, 12T, 13T, 14T, 15T, 16T, 17T and 18T, MPMD.T und MXD.T, vorzugsweise 11T, 12T, 13T, 14T, 15T, 16T, 17T und 18T, MPMD.T und MXD.T, weiter bevorzugt MPMD.T oder MXD.T, mit einem molaren Gehalt von B im Bereich von 30 bis 45 %
- für die Einheit A, die 10T ist, ist die Einheit B ausgewählt aus 9T, 11T, 12T, 13T, 14T, 15T, 16T, 17T and 18T, MPMD.T und MXD.T, vorzugsweise 12T, 13T, 14T, 15T, 16T, 17T und 18T, MPMD.T und MXD.T, weiter bevorzugt MPMD.T oder MXD.T, mit einem molaren Gehalt von B im Bereich von 25 bis 45 %
- für die Einheit A, die 11T ist, ist die Einheit B ausgewählt aus 9T, 10T, 12T, 13T, 14T, 15T, 16T, 17T and 18T, MPMD.T und MXD.T, vorzugsweise 9T, 13T, 15T, 16T, 17T und 18T, MPMD.T und MXD.T, weiter bevorzugt MPMD.T oder MXD.T, mit einem molaren Gehalt von B im Bereich von 20 bis 45 %
- für die Einheit A, die 12T ist, ist die Einheit B ausgewählt aus 9T, 10T, 11T, 13T, 14T, 15T, 16T, 17T und 18T, MPMD.T und MXD.T, vorzugsweise 9T, 10T, 14T, 15T, 16T, 17T und 18T, MPMD.T und MXD.T, weiter bevorzugt MPMD.T oder MXD.T, mit einem molaren Gehalt von B im Bereich von 20 bis 45 %.

10. Verfahren nach Anspruch 9, **dadurch gekennzeichnet, dass** es sich bei der Einheit A um eine 9T-Einheit handelt und die Einheit B ausgewählt ist aus 10T, 11T, 12T, 13T, 14T, 15T, 16T, 17T und 18T, MPMD.T und MXD.T, vorzugsweise 11T, 12T, 13T, 14T, 15T, 16T, 17T und 18T, MPMD.T und MXD.T, weiter bevorzugt MPMD.T oder MXD.T, mit einem molaren Gehalt von B im Bereich von 30 bis 45 %.

11. Verfahren nach Anspruch 9, **dadurch gekennzeichnet, dass** es sich bei der Einheit A um eine 10T-Einheit handelt und die Einheit B ausgewählt ist aus 9T, 11T, 12T, 13T, 14T, 15T, 16T, 17T und 18T, MPMD.T und MXD.T, vorzugsweise 12T, 13T, 14T, 15T, 16T, 17T und 18T und MPMD.T, weiter bevorzugt MPMD.T oder MXD.T und MXD.T, mit einem molaren Gehalt von B im Bereich von 25 bis 45 %.

12. Verfahren nach Anspruch 9, **dadurch gekennzeichnet, dass** es sich bei der Einheit A um eine 11T-Einheit handelt und die Einheit B ausgewählt ist aus 9T, 10T, 12T, 13T, 14T, 15T, 16T, 17T und 18T, MPMD.T und MXD.T, vorzugsweise 9T, 13T, 15T, 16T, 17T und 18T, MPMD.T und MXD.T, weiter bevorzugt MPMD.T oder MXD.T, mit einem molaren Gehalt von B im Bereich von 20 bis 45 %.

13. Verfahren nach Anspruch 9, **dadurch gekennzeichnet, dass** es sich bei der Einheit A um eine 12T-Einheit handelt und die Einheit B ausgewählt ist aus 9T, 10T, 11T, 13T, 14T, 15T, 16T, 17T und 18T, MPMD.T und MXD.T, vorzugsweise 9T, 10T, 14T, 15T, 16T, 17T und 18T, MPMD.T und MXD.T, weiter bevorzugt MPMD.T oder MXD.T, mit einem molaren Gehalt von B im Bereich von 20 bis 45 %.

14. Verfahren nach einem der Ansprüche 6 bis 13, **dadurch gekennzeichnet, dass** ein Teil der Einheit B, der bis zu 70 Mol-%, vorzugsweise weniger als 40 Mol-% bezogen auf B, beträgt, durch eine wie gemäß einem der Ansprüche 1 bis 3 definierte Einheit C und/oder D ersetzt ist.

15. Verfahren nach einem der Ansprüche 1 bis 14, **dadurch gekennzeichnet, dass** es sich bei der Polyamidzusammensetzung um eine unreaktive Zusammensetzung gemäß b) handelt.

16. Verfahren nach einem der Ansprüche 1 bis 14, **dadurch gekennzeichnet, dass** es sich bei der Polyamidzusammensetzung um eine reaktive Prepolymerzusammensetzung gemäß a) und einen Vorläufer des Polyamidpolymers der Matrixmaterials handelt.

17. Verfahren nach Anspruch 16, **dadurch gekennzeichnet, dass** die Zusammensetzung a) mindestens ein reaktives Prepolymer, das an der gleichen Kette zwei endständige Funktionen X' und Y' trägt, umfasst oder daraus besteht, wobei die Funktionen durch Kondensation miteinander reagieren können, wobei X' und Y' für Amin und Carboxy bzw. Carboxy und Amin stehen.

18. Verfahren nach Anspruch 16, **dadurch gekennzeichnet, dass** die reaktive Zusammensetzung a) mindestens zwei Polyamid-Prepolymere, die miteinander reagieren können und die jeweils zwei gleiche endständige Funktionen X' oder Y' tragen, umfasst, wobei die Funktion X' eines Prepolymers nur mit der Funktion Y' des anderen Prepolymers reagieren kann, insbesondere durch Kondensation, wobei spezieller X' und Y' für Amin und Carboxy bzw. Carboxy und Amin stehen.

19. Verfahren nach Anspruch 16, **dadurch gekennzeichnet, dass** die Zusammensetzung a) oder die Vorläuferzusammensetzung Folgendes umfasst oder daraus besteht:
a1) mindestens ein Prepolymer des thermoplastischen Polyamidpolymers mit n endständigen reaktiven Funktionen X, ausgewählt aus: -NH₂, -CO₂H und -OH, vorzugsweise -NH₂ und -CO₂H, wobei n für 1 bis 3, vorzugsweise 1 bis 2, weiter bevorzugt 1 oder 2, spezieller 2, steht,
a2) mindestens ein Kettenverlängerungsmittel Y-A'-Y, wobei A' für einen zweiwertigen Kohlenwasserstoffrest mit nichtpolymerer Struktur steht, der 2 gleiche endständige reaktiven Funktionen Y trägt, die durch Polyaddition mit mindestens einer Funktion X des Prepolymers a1) reagieren können, vorzugsweise mit einer Molmasse von weniger als 500, weiter bevorzugt weniger als 400.

20. Verfahren nach einem der Ansprüche 16 bis 19, **dadurch gekennzeichnet, dass** die reaktiven Prepolymere der Zusammensetzung a) eine zahlenmittlere Molmasse Mn im Bereich von 500 bis 10.000, vorzugsweise von 1000 bis 6000, wie durch potentiometrische Titration bestimmt, aufweisen.

21. Verfahren nach einem der Ansprüche 16 bis 20, wobei X für NH₂ oder OH, insbesondere NH₂, steht und Y aus einem Oxazinon und einem Oxazolinon ausgewählt ist.

22. Verfahren nach einem der Ansprüche 16 bis 20, wobei X für CO₂H steht und Y aus einem Epoxid und einem Oxazolin ausgewählt ist.

23. Verfahren nach Anspruch 22, **dadurch gekennzeichnet, dass** X für CO₂H steht und Y-A'-Y aus Phenylenbisoxazolinen, vorzugsweise 1,3-Phenylenbis(2-oxazolin) oder 1,4-Phenylenbis(2-oxazolin) (PBO), ausgewählt ist.

24. Verfahren nach einem der Ansprüche 1 bis 23, **dadurch gekennzeichnet, dass** es mindestens einen Schritt der Polymerisation mindestens einer wie gemäß einem der Ansprüche 16 bis 23 definierten reaktiven Zusammensetzung a) oder einen Schritt der Formgebung oder Verarbeitung mindestens einer wie gemäß Anspruch 15 definierten unreaktiven Zusammensetzung b) umfasst.

25. Verfahren nach Anspruch 24, **dadurch gekennzeichnet, dass** es die folgenden Schritte umfasst:
i) Einspritzen einer wie gemäß einem der Ansprüche 1 bis 24 definierten Zusammensetzung, die frei von faserförmigem Verstärkungsmittel ist, in eine offene oder geschlossene Form oder formfrei,
ii) Polymerisationsreaktion im Fall einer reaktiven Polyamidzusammensetzung a) gemäß einem der Ansprüche 16 bis 23 durch Erhitzen der Zusammensetzung aus Schritt i) mit Kettenverlängerung, je nachdem durch Polykondensationsreaktion oder durch Polyadditionsreaktion in der Masse in schmelzflüssigem Zustand, im Fall der Polykondensation mit Entfernung der Kondensationsprodukte unter Vakuum, wenn es sich um eine geschlossene Form handelt, mit Hilfe eines Vakuumextraktionssystems, wenn nicht, und wobei die Polykondensation vorzugsweise in einer offenen Form oder formfrei durchgeführt wird,
iii) Verarbeiten oder Formen der Zusammensetzung aus Schritt i) im Fall einer unreaktiven Polyamidzusammensetzung b) zur Bildung des fertigen Teils in einer Form oder mit einem anderen Verarbeitungssystem und im Fall einer reaktiven Zusammensetzung a) einen Schritt des Verarbeitens durch Formgebung oder ein anderes Verarbeitungssystem gleichzeitig mit dem Polymerisationsschritt ii).

26. Verfahren nach Anspruch 25, **dadurch gekennzeichnet, dass** die Verarbeitung gemäß einem RIM- oder Spritzpressverfahren durchgeführt wird, insbesondere im Fall einer reaktiven Zusammensetzung a).

## Claims

1. Process for the manufacture of a thermoplastic material, in particular of a mechanical part based on said material, **characterized in that** it comprises at least one stage of moulding by injection of a polyamide composition for thermoplastic material or thermoplastic material composition, said material comprising a thermoplastic matrix based on at least one thermoplastic polymer, said composition being **characterized**:
- **in that** said matrix thermoplastic polymer is a semicrystalline polyamide polymer with a glass transition temperature Tg of at least 90°C and with a melting point Tm of less than or equal to 280°C, as respectively determined according to Standards ISO 11357-2:2013 and 11357-3:2013, and the enthalpy of crystallization, measured by differential scanning calorimetry (DSC) according to Standard ISO 11357-3:2013, is greater than 40 J/g, preferably greater than 45 J/g,
- **in that** said composition comprises:
a) a reactive composition comprising or consisting of at least one reactive polyamide prepolymer, said composition being a precursor composition of said polyamide polymer of said matrix,
or, as an alternative to a),
b) a non-reactive composition of at least one polyamide polymer, including the polymer resulting from a), said composition being that of said thermoplastic matrix with the Tg and the Tm being as defined above, and
- **in that** said composition a) or b) comprises or consists of one or more polyamides which are prepolymers according to a) or which are polymers according to b), which comprise different amide units A and B and optionally amide units C and D, selected as follows:
- A: is a predominant amide unit present at a molar content ranging from 55% to 95%, preferably from 55% to 85%, more preferably from 55% to 80%, chosen from x.T units, where x is a linear C₉ to C₁₈, preferably C₉, C₁₀, C₁₁ and C₁₂, aliphatic diamine and where T is terephthalic acid,
- B: is an amide unit different from A, which unit B is present at a molar content ranging from 5% to 45%, preferably from 15% to 45%, more preferably from 20% to 45%, depending on the Tm of the polyamide based on unit A, and said amide unit B is chosen from x'.T units, where x' is chosen from:
∘ B1) a branched aliphatic diamine carrying a single methyl or ethyl branch (or branching) and having a main chain length different by at least two carbon atoms with respect to the main chain length of the diamine x of said associated unit A, x' preferably being 2-methylpentamethylenediamine (MPMD), or
∘ B2) m-xylylenediamine (MXD) or
∘ B3) a linear C₄ to C₁₈ aliphatic diamine when, in the unit A, said diamine x is a linear C₁₁ to C₁₈ aliphatic diamine and x' is a C₉ to C₁₈ diamine when, in the unit A, said diamine x is a C₉ or C₁₀ diamine, preferably with a difference of at least two carbon atoms between the chain of diamine x of said unit A and the chain of diamine x' of said unit B, with the proviso that the unit B3 is chosen from a linear C₄, C₅ and C₇ to C₁₈ aliphatic diamine when, in said unit A, said diamine x is a linear C₁₂ aliphatic diamine,
and preferably B being chosen from x'.T, where x' is MPMD according to B1) or MXD according to B2) or a linear aliphatic diamine as defined above according to B3) and more preferably x' is MPMD according to B1) or MXD according to B2) and more preferably still MXD according to B2),
- C: optional amide unit different from A and from B, chosen from the amide units based on a cycloaliphatic and/or aromatic structure or based on x'T as defined above for B but with x' different from x' for the unit B,
- D: optional amide unit different from A, from B and from C when C is present and chosen from the aliphatic amide units resulting from:
▪ C₆ to C₁₂, preferably C₆, C₁₁ and C₁₂, amino acids or lactams or their mixtures
▪ the reaction of a linear C₆ to C₁₈, preferably C₆ to C₁₂, aliphatic diacid and of a linear C₆ to C₁₈, preferably C₆ to C₁₂, aliphatic diamine or of their mixtures and under the condition that the sum of the molar contents of A + B + C + D is equal to 100%,
said composition being devoid of reinforcing fibres.

2. Process according to Claim 1, **characterized in that** said amide unit C is present and in partial replacement of B at a molar content ranging up to 25%, with respect to said unit B.

3. Process according to either of Claims 1 and 2, **characterized in that** said unit D is present and in partial replacement of B at a molar content ranging up to 70%, with respect to said unit B.

4. Process according to one of Claims 1 to 3, **characterized in that** the difference Tm-Tc between the melting point Tm and the crystallization temperature Tc of said matrix polymer does not exceed 50°C, preferably does not exceed 40°C, more preferably does not exceed 30°C, as determined according to Standard 11357-3:2013.

5. Process according to one of Claims 1 to 4, **characterized in that** said amide unit A is present with a molar content ranging from 55% to 80%, preferably from 55% to 75% and more preferably from 55% to 70%, with respect to all of the units of said polymer.

6. Process according to one of Claims 1 to 5, **characterized in that** said unit B corresponds to x'T with x' chosen according to option B1), in particular with x' being MPMD.

7. Process according to one of Claims 1 to 5, **characterized in that** said unit B corresponds to x'T with x' chosen according to option B2), x' being MXD.

8. Process according to one of Claims 1 to 5, **characterized in that** said unit B corresponds to a linear aliphatic diamine according to option B3).

9. Process according to one of Claims 1 to 5, **characterized in that** the units A and B are selected as follows:
- for the unit A which is 9T, said unit B is selected from: 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferably MPMD.T or MXD.T, with a molar content of B ranging from 30% to 45%
- for the unit A which is 10T, said unit B is selected from: 9T, 11T, 12T, 13T, 14T, 15T, 16T, 17T and 18T, MPMD.T and MXD.T, preferably 12T, 13T, 14T, 15T, 16T, 17T and 18T, MPMD.T and MXD.T, more preferably MPMD.T or MXD.T, with a molar content of B ranging from 25% to 45%
- for the unit A which is 11T, said unit B is selected from: 9T, 10T, 12T, 13T, 14T, 15T, 16T, 17T and 18T, MPMD.T and MXD.T, preferably 9T, 13T, 15T, 16T, 17T and 18T, MPMD.T and MXD.T, more preferably MPMD.T or MXD.T, with a molar content of B ranging from 20% to 45%
- for the unit A which is 12T, said unit B is selected from: 9T, 10T, 11T, 13T, 14T, 15T, 16T, 17T and 18T, MPMD.T and MXD.T, preferably 9T, 10T, 14T, 15T, 16T, 17T and 18T, MPMD.T and MXD.T, more preferably MPMD.T or MXD.T, with a molar content of B ranging from 20% to 45%.

10. Process according to Claim 9, **characterized in that** the unit A is a 9T unit and the unit B is selected from: 10T, 11T, 12T, 13T, 14T, 15T, 16T, 17T and 18T, MPMD.T and MXD.T, preferably 11T, 12T, 13T, 14T, 15T, 16T, 17T and 18T, MPMD.T and MXD.T, more preferably MPMD.T or MXD.T, with a molar content of B ranging from 30% to 45%.

11. Process according to Claim 9, **characterized in that** the unit A is a 10T unit and the unit B is selected from: 9T, 11T, 12T, 13T, 14T, 15T, 16T, 17T and 18T, MPMD.T and MXD.T, preferably 12T, 13T, 14T, 15T, 16T, 17T and 18T, MPMD.T, more preferably MPMD.T or MXD.T and MXD.T, with a molar content of B ranging from 25% to 45%.

12. Process according to Claim 9, **characterized in that** the unit A is an 11T unit and the unit B is selected from: 9T, 10T, 12T, 13T, 14T, 15T, 16T, 17T and 18T, MPMD.T and MXD.T, preferably 9T, 13T, 15T, 16T, 17T and 18T, MPMD.T and MXD.T, more preferably MPMD.T or MXD.T, with a molar content of B ranging from 20% to 45%.

13. Process according to Claim 9, **characterized in that** the unit A is a 12T unit and the unit B is selected from: 9T, 10T, 11T, 13T, 14T, 15T, 16T, 17T and 18T, MPMD.T and MXD.T, preferably 9T, 10T, 14T, 15T, 16T, 17T and 18T, MPMD.T and MXD.T, more preferably MPMD.T or MXD.T, with a molar content of B ranging from 20% to 45%.

14. Process according to one of Claims 6 to 13, **characterized in that** a portion of the unit B which is up to 70%, preferably less than 40 mol%, with respect to B, is replaced with a unit C and/or D as are defined according to one of Claims 1 to 3.

15. Process according to one of Claims 1 to 14, **characterized in that** said polyamide composition is a non-reactive composition according to b).

16. Process according to one of Claims 1 to 14, **characterized in that** said polyamide composition is a reactive prepolymer composition according to a) and precursor of said polyamide polymer of said matrix of the material.

17. Process according to Claim 16, **characterized in that** said composition a) comprises or consists of at least one reactive prepolymer carrying, on the same chain, two end functions X' and Y' which are respectively coreactive with one another by condensation, with X' and Y' being amine and carboxyl or carboxyl and amine respectively.

18. Process according to Claim 16, **characterized in that** said reactive composition a) comprises at least two polyamide prepolymers which are reactive with one another and which each respectively carry two identical end functions X' or Y', said function X' of a prepolymer being able to react only with said function Y' of the other prepolymer, in particular by condensation, more particularly with X' and Y' being amine and carboxyl or carboxyl and amine respectively.

19. Process according to Claim 16, **characterized in that** said composition a) or precursor composition comprises or consists of:
a1) at least one prepolymer of said thermoplastic polyamide polymer, carrying n end reactive functions X, chosen from: -NH₂, -CO₂H and -OH, preferably NH₂ and - CO₂H, with n being from 1 to 3, preferably from 1 to 2, more preferably 1 or 2, more particularly 2
a2) at least one chain extender Y-A'-Y, with A' being a hydrocarbon biradical of non-polymeric structure, carrying 2 identical end reactive functions Y, which are reactive by polyaddition with at least one function X of said prepolymer a1), preferably with a molecular weight of less than 500 and more preferably of less than 400.

20. Process according to one of Claims 16 to 19, **characterized in that** said reactive prepolymers of said composition a) have a number-average molecular weight Mn ranging from 500 to 10 000, preferably from 1000 to 6000, as determined by potentiometric titration.

21. Process according to one of Claims 16 to 20, in which X is NH₂ or OH, in particular NH₂, and Y is chosen from an oxazinone and an oxazolinone.

22. Process according to one of Claims 16 to 20, in which X is CO₂H and Y is chosen from an epoxy and an oxazoline.

23. Process according to Claim 22, **characterized in that** X is CO₂H and Y-A'-Y is chosen from phenylenebisoxazolines, preferably 1,3-phenylenebis(2-oxazoline) or 1,4-phenylenebis(2-oxazoline) (PBO).

24. Process according to one of Claims 1 to 23, **characterized in that** it comprises at least one stage of polymerization of at least one reactive composition a) as defined according to one of Claims 16 to 23 or a stage of moulding or processing of at least one non-reactive composition b) as defined according to Claim 15.

25. Process according to Claim 24, **characterized in that** it comprises the following stages:
i) injection of a composition as defined according to one of Claims 1 to 24 devoid of fibrous reinforcer into an open or closed mould or out of mould,
ii) a polymerization reaction in the case of a reactive composition a) of polyamide according to one of Claims 16 to 23, by heating said composition of stage i) with chain extension, as the case may be, by a polycondensation reaction or by a polyaddition reaction, of bulk melt type, with, in the case of the polycondensation, removal under vacuum of the condensation products when a closed mould is involved, using a vacuum extraction system, otherwise and preferably with the polycondensation being carried out in an open mould or out of mould,
iii) processing or moulding of said composition of stage i), in the case of a non-reactive polyamide composition b), in order to form the final part in a mould or with another processing system, and, in the case of a reactive composition a), a stage of processing by moulding or by another processing system and simultaneously with polymerization stage ii).

26. Process according to Claim 25, **characterized in that** said processing is carried out according to a RIM or injection-compression process, in particular in the case of a reactive composition a).
